# EUROPEAN PATENT SPECIFICATION

(11) **EP 4 161 732 B1**
(45) Date of publication and mention of the grant of the patent: **04.11.2026**
(21) Application number: 21728311.8
(22) Date of filing: 20.05.2021
(51) Int. Cl.: B24D 3/00, B24D 11/00, C09K 3/14

(54) **SHAPED ABRASIVE PARTICLES AND METHODS OF MANUFACTURE THE SAME**
GEFORMTE SCHLEIFPARTIKEL UND VERFAHREN ZUR HERSTELLUNG DAVON
PARTICULES ABRASIVES FAÇONNÉES ET LEURS PROCÉDÉS DE FABRICATION

(30) Priority: 04.06.2020 US 202062704952 P
(43) Date of publication of application: 12.04.2023
(73) Proprietor: 3M Innovative Properties Company, Saint Paul, Minnesota 55133-3427 (US)
(72) Inventor: LIU, Yuyang, Saint Paul, Minnesota 55133-3427 (US); SALMON, Fay T., Saint Paul, Minnesota 55133-3427 (US); GIVOT, Maiken, Saint Paul, Minnesota 55133-3427 (US); ERICKSON, Dwight D., Saint Paul, Minnesota 55133-3427 (US); ADEFRIS, Negus B., Saint Paul, Minnesota 55133-3427 (US); LUKOWSKI, Mark A., Saint Paul, Minnesota 55133-3427 (US)
(74) Representative: Vossius & Partner Patentanwälte Rechtsanwälte mbB
(86) International application number: PCT/IB2021/054391
(87) International publication number: WO 2021/245494

(56) References cited:
- KR-B1- 101 242 011
- US-A1- 2010 151 195
- US-A1- 2014 250 797

## Description

### BACKGROUND

Abrasive particles and abrasive articles including the abrasive particles are useful for abrading, finishing, or grinding a wide variety of materials and surfaces in the manufacturing of goods. As such, there continues to be a need for improving the cost, performance, or life of abrasive particles or abrasive articles.

US 2014/250797 A1 relates to a method of forming a shaped abrasive particle including forming a first mixture and a second mixture in a single forming process into an integral precursor shaped abrasive particle, wherein the first mixture has a different composition than a composition of the second mixture.

KR 101242011 B1 relates to a manufacturing method of a grinding tape made of various materials and with a grinding protrusion in a 3D structure shape comprising: preparing a cylinder-shaped or plate-shaped first mold including a 3D structure-shaped pattern unit corresponding to a plurality of 3D structure-shaped grinding protrusions; forming a belt mold in a longitudinal direction by the first mold; installing the belt mold in between and a first roll and a second roll, wherein the first roll is comprised of a transparent material and includes an ultraviolet irradiation unit; supplying an ultraviolet hardening abrading to the 3D structure-shaped pattern unit of the belt mold; supplying a base material from a third roll to an upper part of the belt mold; pressurizing and hardening with a pressurization hardening unit located in the upper part of the first roll.

US 2010/151195 A1 relates to abrasive particles comprising dish-shaped abrasive particles each having a sidewall; each of the shaped abrasive particles comprising alpha alumina and having a first face and a second face separated by a thickness, t; and wherein either the first face or the second face is recessed or concave.

### SUMMARY OF THE DISCLOSURE

The invention is set out in the appended set of claims.

Various embodiments disclosed herein relate to multiphase abrasive particle precursors. The precursor includes a first phase of a first material with a substantially constant first composition throughout the first phase. The precursor also includes a second phase, of a second material, with a substantially constant composition throughout the second phase. The precursor includes an interface between the first and second phases. The multiphase abrasive particle precursor is a shaped abrasive particle precursor.

Curved shaped abrasive particles may provide significant advantages over other flat shaped abrasive particles. Curved abrasive particles may allow for better adhesion of the particles within an abrasive article structure. The improved adhesion may result in reduced shelling as compared to flat, or 2D polygonal shaped particles. Curved abrasive particles may better align within an abrasive article structure, with either easier orientation or self-orientation. The open structures of the curved abrasive particles offer better anti-loading performance than that of comparative complete particles The term "loading" is used in the sandpaper industry to refer to a product that can be clogged or gummed up due to residue filling up the inter-spaces between abrasive particles with small particles of the material being sanded, making the sandpaper work much harder or to even ruin it (end lifespan). Another feature of curved shaped abrasive particles is that the empty interior space can be filled with grinding aids, for example lubricants.

### BRIEF DESCRIPTION OF THE FIGURES

The drawings illustrate generally, by way of example, but not by way of limitation, various embodiments discussed in the present document.
FIGS. 1A-1C illustrate shaped abrasive particles with multiple phases in accordance with embodiments herein.
FIG. 2 illustrates a method of making multiphase shaped abrasive particles in accordance with embodiments herein.
FIG. 3 illustrates an example of a coated abrasive article in which embodiments disclosed herein may be useful.
FIGS. 4A-4F illustrate curved polyhedral shaped abrasive particles in accordance with embodiments herein.
FIG. 5 illustrates curved polyhedral shaped abrasive particles precisely placed on a surface in an embodiment herein.
FIGS. 6A-6B illustrate methods of making curved shaped abrasive particle in embodiments herein.
FIG. 7 illustrates a method of making curved shaped abrasive particle in embodiments herein.
FIGS. 8A-8D illustrate twisted abrasive particles and abrasive articles in which they may be useful.
FIGS. 9A-9E illustrate examples of multiphase abrasive particles.
FIG. 10-13 illustrate examples of curved abrasive particles and comparative results.
FIGS. 14-15 illustrates examples of twisted abrasive particles.

### DETAILED DESCRIPTION

Reference will now be made in detail to certain embodiments of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the disclosure, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

As used herein, the term "shaped abrasive particle", means an abrasive particle with at least a portion of the abrasive particle having a predetermined shape that is replicated from a mold cavity used to form the shaped precursor abrasive particle. Except in the case of abrasive shards (e.g. as described in US Patent Application Publication Nos. 2009/0169816 and 2009/0165394), the shaped abrasive particle will generally have a predetermined geometric shape that substantially replicates the mold cavity that was used to form the shaped abrasive particle. Shaped abrasive particle as used herein excludes abrasive particles obtained by a mechanical crushing operation.

For the purposes of this invention geometric shapes are also intended to include regular or irregular polygons or stars wherein one or more edges (parts of the perimeter of the face) can be arcuate (either of towards the inside or towards the outside, with the first alternative being preferred). Hence, for the purposes of this invention, triangular shapes also include three- sided polygons wherein one or more of the edges (parts of the perimeter of the face) can be arcuate, i.e., the definition of triangular extends to spherical triangles and the definition of quadrilaterals extends to superellipses. The second side may have (and preferably is) a second face. The second face may have a perimeter of a second geometric shape.

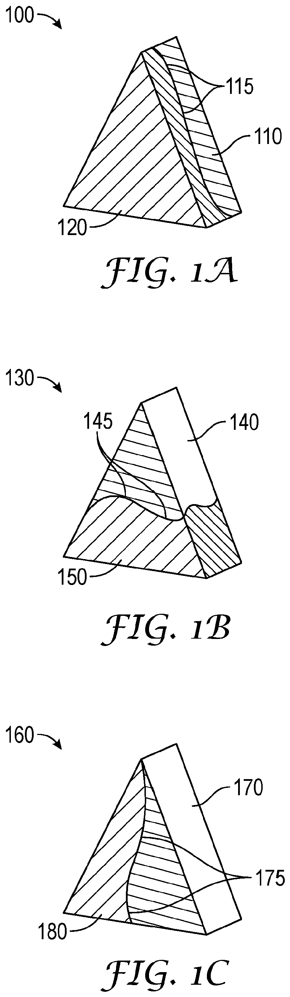

FIGS. 1A-1C illustrate shaped abrasive particles with multiple phases in accordance with embodiments herein. FIGS. 1A-1C illustrate three shaped abrasive particles 100, 130, 160, each of which includes multiple phases of different composition. As illustrated in FIG. 1A, one multiphase shaped abrasive particle includes a first layer 110 and a second layer 120 with an interface 115 extending between the layers 110, 120. Particles 110, 130 and 160 are formed, in one embodiment, by filling a mold cavity with first one, and then a second, composition. In the embodiment of FIG. 1A, the mold cavity is triangular shaped, and the material forming layers 110 and 120 are sequentially deposited such that triangular-shaped layers 110 and 120 are formed. Interface 110 is, in one embodiment, a distinct interface that extends across the entire triangular surface. In another embodiment, interface 110 is characterized at least by some intermixing between the compositions of layers 110, 120. Some time may pass between the first layer 110 and the second layer 120 being deposited, such that at least some drying occurs, in some embodiments. The two compositions can be dispensed, in one embodiment, as slurries or, on another embodiment, as gels, or, in a third embodiment, as one slurry and one gel.

Particle 130, in contrast to particle 100, is formed by dispensing a first material 140 in a first portion of a triangular-shaped mold cavity while a second material 150 is dispensed in a second portion of the triangular-shaped mold cavity. An interface 145 is formed as the two compositions meet during dispensation of the two compounds. In one embodiment, the two compositions are dispensed substantially simultaneously. The two compositions can be dispensed, in one embodiment, as slurries or, on another embodiment, as gels, or, in a third embodiment, as one slurry and one gel.

Notably, the two compositions remain substantially constant during dispensing into the mold. E.g. one composition is not provided as a doping agent to the other composition. The composition of the first layer 140 remains substantially constant from a dispensing source into the mold cavity. Similarly, the composition of the second layer 150 remains substantially constant. An interface 145 is formed where the first and second compositions 140, 150 meet within the cavity.

Particle 160 is also formed, similarly to particle 130, by dispensing a first material 170, in a first portion of a mold cavity, and a second material 180 in a second portion of the mold cavity. Interface 175 is formed as compositions 170, 180 meet within the mold cavity. In one embodiment, the two compositions are dispensed substantially simultaneously. The two compositions can be dispensed, in one embodiment, as slurries or, on another embodiment, as gels, or, in a third embodiment, as one slurry and one gel.

As illustrated in FIGS. 1A-1C, an interface forms when two, or more, compositions are deposited in a mold cavity. While only two compositions are illustrated in FIGS. 1A-1C, it is envisioned that any number of compositions could be deposited in a mold cavity. In some embodiments, some mixing may occur at the interface, such that three phases are present, a first composition, a second composition, and an interface composition. In some embodiments, an interface substantially bisects a base of the shaped abrasive particle, as illustrated in FIG. 1C, such that two portions are formed. In another embodiment, the interface is substantially parallel to a base of the triangle.

In one embodiment, the first and second compositions are alpha alumina and zirconia alumina. Zirconia-doped alumina is known to provide better abrasive performance, however abrasive grains composed of zirconia alumina may be considerably more expensive. Previous attempts in the art to gain the benefit of zirconia alumina have included doping an alpha alumina particle with zirconia particulates in some portions, or throughout an entirety of a particle. For example, U.S. Provisional Patent Application Publication 2013/0283705 to VSM describes a method for making zirconia reinforced alumina grains that include zirconia precipitations within an alumina structure.

In contrast, what is envisioned here are two separate compositions, separated by a distinct interface. One composition could be a zirconia-doped alumina slurry or gel, while the other is a zirconia free slurry or gel, for example. Or, one composition could be a zirconia alumina gel or slurry. Examples of abrasive particles composed of two or more compositions may include any combination of inorganic/inorganic materials, such as alumina/silica; inorganic/organic combination such as ceramic/polymer; or combination of same material with different crystal phases, such as crystal/amorphous. A suitable example is the combination of alumina with α-alumina/γ-alumina.

Other suitable abrasive compounds, including other ceramic compounds, are also expressly contemplated as discussed in greater detail herein.

While illustrated in FIGS. 1A-1C are substantially 50:50 mixtures of two compositions, it is expressly contemplated that one compound may be present in higher quantities than the other. For example, a minority composition may include at least 15% volume of the particle body. In some embodiments, in each particle at least 30% volume of the particle body is composed of the minority composition. In some embodiments, 50-90% volume of the particle body is composed of zirconia alumina.

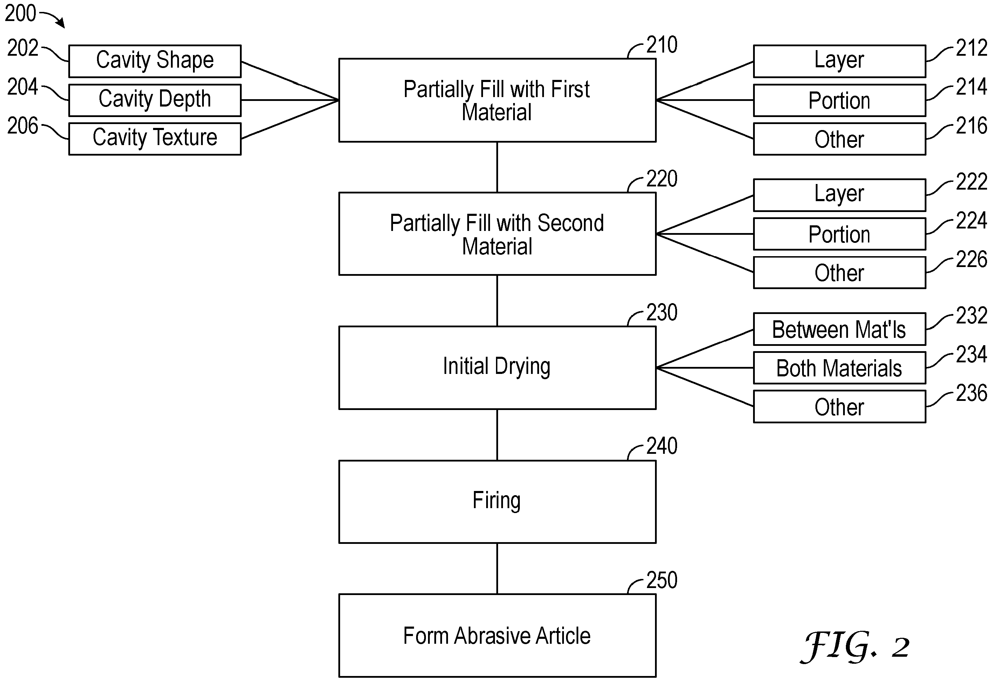

FIG. 2 illustrates a method of making multiphase shaped abrasive particles in accordance with embodiments herein. Method 200 may be used to make the particles illustrated in FIGS. 1A-1C. Additionally, method 200 may be suitable for making other shaped abrasive particles.

In block 210, a mold cavity is partially filled with a material having a first composition. The material might be a sol-gel or a slurry. The material is an abrasive particle precursor material. The mold cavity has a shape 202, and a depth 204. In some embodiments, the cavity is smooth, in others it includes a texture 206. Partially filling the mold cavity with a first material may include dispensing the first material in a layer 212, which may extend along an entire bottom surface of the cavity, forming shape 202, in one embodiment. Partially filling may also include dispensing the material only in a portion 214 of the mold cavity, for example by positioning a dispenser in a corner, along an edge, or otherwise near the perimeter of the mold cavity. Other arrangements are also possible, as indicated in block 216. For example, the first material could be dispensed such that it only creates a partial layer covering only a portion of shape 202.

Shape 202 may be any suitable abrasive shape. FIGS. 1A-1C illustrate equilateral triangular prisms. However, other triangular particles, including particles with rake angles, such as those described in WO 2019/207423, published on October 31, 2019, or in WO 2019/207417, published on October 31, 2019, or in PCT Application Ser. No. IB 2019/059112, filed on October 24, 2019.

As used herein in referring to triangular abrasive particles, the term "length" refers to the maximum dimension of a triangular abrasive particle. "Width" refers to the maximum dimension of the triangular abrasive particle that is perpendicular to the length. The terms "thickness" or "height" refer to the dimension of the triangular abrasive particle that is perpendicular to the length and width. For abrasive particles with shapes other than triangles, length refers to a longest dimension, and width refers to the maximum dimension perpendicular to the length, while thickness refers to a dimension perpendicular to both the length and width.

Other polygonal shapes, including acute triangles, obtuse triangles, right triangles, isosceles triangles, or scalene triangles are also envisioned for shaped abrasive particles herein. Quadrilateral prisms, including rectangular, kite, diamond, square or cubic prisms are also envisioned. Other polygonal shapes are also envisioned such as pentagonal prisms, hexagonal prisms, etc.

The shaped abrasive particles may have an elongated shape, such as that described in U.S. PAP 2019/0106362, published on April 11, 2019, or in WO 2019/069157, published on April 11, 2019. The elongate shape may be triangular-prism shaped, rod-shaped, or otherwise including one or more vertices along the perimeter.

The shaped abrasive particles may have a variable cross-sectional area along a length of the particle, such as those described in U.S. PAP 2019/0249051. For example, the shaped abrasive particles may be dog-bone shaped, or otherwise have a cross sectional area that varies from a first end to a second end.

The shaped abrasive particles may have a tetrahedron shape, such as those described in WO 2018/207145, published on November 15, 2018, or those of U.S. Pat. No. 9,573,250, issued on February 21, 2017.

The shaped abrasive particles may also have a concave or convex portion, or may be defined as having one or more acute interior angles, such as those described in U.S. 10,301,518, issued on May 28, 2019.

The shaped abrasive particles may also include shape-on-shape particles, such as a plate on plate shaped particle as described in 8,728,185, issued on May 20, 2014.

The shaped abrasive particles may also include shaped abrasive particles that have an irregular polygonal shape, as described in U.S. Provisional Patent Application 62/924956, filed on October 23, 2019.

The shaped abrasive particles may also be shaped to be self-standing abrasive particles, such that cutting portions are more likely to embed in a make coat, for example, in an orientation away from the backing, such as those described in PCT Application with Ser. No. IB 2019/060457, filed on December 4, 2019.

Shaped abrasive particles can also have a cavity. Shaped abrasive particles may also include an aperture, such as that described in U.S. Pat. 8,142,532, issued on March 27, 2012.

Shaped abrasive particles can also have a low roundness factor. Methods for making shaped abrasive particles with low Roundness Factor are for example described in US Patent Application Publication No. 2010/0319269.

Shaped abrasive particles may have a second vertex on a second side, as described in U.S. 9,447,311, issued on September 16, 2016. Methods for making abrasive particles wherein the second side is a vertex (for example, dual tapered abrasive particles) or a ridge line (for example, roof shaped particles) are for example described in U.S. PAP 2012/022733, published on September 13, 2012.

Shaped abrasive particles may be formed to have sharp tips, such as those described in U.S. PAP 2019/0233693, published on August 1, 2019, or in U.S. Provisional Application with Serial No. 62/877443, filed on July 23, 2019.

Shaped abrasive particles may also be formed to have a precision shaped portion and a non-shaped portion, such as a crushed portion, as described in U.S. Provisional Patent Application 62/833865, filed on April 15, 2019.

Shaped abrasive particles can also have a combination of one or more of shape features discussed herein, including a sloping sidewall, a groove, a recess, a facet, a fractured surface, a cavity, more than one vertex, sharp edges, a non-shaped portion, a notch, a rake angle and / or a low roundness factor.

In block 220, the mold cavity is partially filled with a second material. For example, the second material may be dispensed in a second layer 222, over first layer 212. The second material may be dispensed to occupy a portion 224 of the mold cavity. This may be done by dispensing the second material simultaneously with the first material, in some embodiments. However, in other embodiments, the second material is dispensed after the first material. Other arrangements 226 are also suitable. For example, the second material may be dispensed into the first material, causing the first material to disperse towards edges of the mold cavity to make room for the dispensing second material.

The first material may be at least 10% of the total volume of the material dispensed into the mold cavity, in one embodiment, or at least 15%, or at least 20%, or at least 30%, or at least 35%, or at least 40%, or at least 45%, or at least 50%, or at least 55%, or at least 60%, or at least 65%, or at least 70%, or at least 75%, or at least 80%, or at least 85%, or at least 90% of the total volume of the material dispensed into the mold cavity.

Discussed herein are examples and embodiments that concern shaped abrasive particles with only two materials forming an abrasive particle composition. However, it is expressly contemplated that additional materials may be dispensed, or present, within a mold cavity. Additionally, one of the first and second materials may be doped or otherwise include particulates of a third composition as well, in some embodiments.

As discussed below, the dispensed materials may have differing solvent compositions that may cause differential drying rates, as discussed below. An initial dispensing ratio may differ from a final volumetric ratio between dispensed materials, as the solvent is evaporated or otherwise removed from the abrasive particles during further processing.

In block 230, the abrasive particle composition in the mold cavity undergoes an initial drying of both materials, as illustrated in block 234, in some embodiments. This may be in addition to an initial drying between dispensing the first and second materials, if they are dispensed sequentially, as illustrated in block 232, in some embodiments. Additional drying steps, or other processing steps such as evaporation, may be undergone, as illustrated in block 236.

In block 240, the abrasive particle undergoes a firing, or sintering, process, as discussed in greater detail below. The firing may be done before particle coating processes, or after, depending on the coating used.

In block 250, the abrasive particle is used to form an abrasive article, such as a coated abrasive article, a bonded abrasive article, a nonwoven abrasive article, an abrasive brush, or may otherwise be used in an abrasive or finishing operation.

Shaped abrasive particles can be formed from many suitable materials or combinations of materials. For example, polygonal shaped abrasive particles can include a ceramic material or a polymeric material. The ceramic material can include alpha alumina, sol-gel derived alpha alumina, or a mixture thereof. Other suitable materials include a fused aluminum oxide, a heat-treated aluminum oxide, a ceramic aluminum oxide, a sintered aluminum oxide, a silicon carbide material, a titanium diboride, a boron carbide, a tungsten carbide, a titanium carbide, a diamond, a cubic boron nitride, a garnet, a fused alumina-zirconia, a cerium oxide, a zirconium oxide, a titanium oxide or a combination thereof.

Examples of suitable abrasive particle compositions for abrasive particles herein include: fused aluminum oxide; heat-treated aluminum oxide; white fused aluminum oxide; ceramic aluminum oxide materials such as those commercially available under the trade designation 3M CERAMIC ABRASIVE GRAIN from 3M Company, St. Paul, MN; brown aluminum oxide; blue aluminum oxide; silicon carbide (including green silicon carbide); titanium diboride; boron carbide; tungsten carbide; garnet; titanium carbide; diamond; cubic boron nitride; garnet; fused alumina zirconia; iron oxide; chromia; zirconia; titania; tin oxide; quartz; feldspar; flint; emery; sol-gel-derived abrasive particles; and combinations thereof. Of these, molded sol-gel derived alpha alumina abrasive particles are preferred in many embodiments. Abrasive material that cannot be processed by a sol-gel route may be molded with a temporary or permanent binder to form shaped precursor particles which are then sintered to form shaped abrasive particles, for example, as described in U. S. Pat. Appln. Publ. No. 2016/0068729 A1 (Erickson et al.).

Examples of sol-gel-derived abrasive particles and methods for their preparation can be found in U. S. Pat. Nos. 4,314,827 (Leitheiser et al.); 4,623,364 (Cottringer et al.); 4,744,802 (Schwabel), 4,770,671 (Monroe et al.); and 4,881,951 (Monroe et al.). It is also contemplated that the abrasive particles could include abrasive agglomerates such, for example, as those described in U. S. Pat. Nos. 4,652,275 (Bloecher et al.) or 4,799,939 (Bloecher et al.). In some embodiments, first and / or abrasive particles may be surface-treated with a coupling agent (e.g., an organosilane coupling agent) or other physical treatment (e.g., iron oxide or titanium oxide) to enhance adhesion of the abrasive particles to the binder (e.g., make and/or size layer). The abrasive particles may be treated before combining them with the corresponding binder precursor, or they may be surface treated *in situ* by including a coupling agent to the binder.

Preferably, abrasive particles described herein are ceramic abrasive particles such as, for example, sol-gel-derived polycrystalline alpha alumina particles. Abrasive particles composed of crystallites of alpha alumina, magnesium alumina spinel, and a rare earth hexagonal aluminate may be prepared using sol-gel precursor alpha alumina particles according to methods described in, for example, U. S. Pat. No. 5,213,591 (Celikkaya et al.) and U. S. Pat. Appln. Publ. Nos. 2009/0165394 A1 (Culler et al.) and 2009/0169816 A1 (Erickson et al.).

Alpha alumina-based shaped abrasive particles can be made according to well-known multistep processes. Briefly, the method includes the steps of making either a seeded or non-seeded sol-gel alpha alumina precursor dispersion that can be converted into alpha alumina; filling one or more mold cavities having the desired outer shape of the abrasive particle with the sol-gel, drying the sol-gel to form precursor triangular abrasive particles; removing the precursor abrasive particles from the mold cavities; calcining the precursor abrasive particles to form calcined, precursor abrasive particles, and then sintering the calcined, precursor abrasive particles to form the first and / or second set of abrasive particles.

Further details concerning methods of making sol-gel-derived abrasive particles can be found in, for example, U. S. Pat. Nos. 4,314,827 (Leitheiser); 5,152,917 (Pieper et al.); 5,435,816 (Spurgeon et al.); 5,672,097 (Hoopman et al.); 5,946,991 (Hoopman et al.); 5,975,987 (Hoopman et al.); and 6,129,540 (Hoopman et al.); and in U. S. Publ. Pat. Appln. No. 2009/0165394 Al (Culler et al.).

In some preferred embodiments, the abrasive particles are precisely-shaped in that individual abrasive particles will have a shape that is essentially the shape of the portion of the cavity of a mold or production tool in which the particle precursor was dried, prior to optional calcining and sintering.

Abrasive particles used in the present disclosure can typically be made using tools (i.e., molds) cut using precision machining, which provides higher feature definition than other fabrication alternatives such as, for example, stamping or punching.

Examples of sol-gel-derived alpha alumina (i.e., ceramic) abrasive particles can be found in U. S. Pat. Nos. 5,201,916 (Berg); 5,366,523 (Rowenhorst (Re 35,570)); and 5,984,988 (Berg). Details concerning such abrasive particles and methods for their preparation can be found, for example, in U. S. Pat. Nos. 8,142,531 (Adefris et al.); 8,142,891 (Culler et al.); and 8,142,532 (Erickson et al.); and in U. S. Pat. Appl. Publ. Nos. 2012/0227333 (Adefris et al.); 2013/0040537 (Schwabel et al.); and 2013/0125477 (Adefris).

Examples of slurry derived alpha alumina abrasive particles can be found in WO 2014/070468, published on May 8, 2014. Slurry derived particles may be formed from a powder precursor, such as alumina oxide powder. The slurry process may be advantageous for larger particles that can be difficult to make using sol-gel techniques.

The abrasive particles may undergo a sintering process, such as the process described in U.S. Pat. 1,040,0146, issued on September 3, 2019, for example. However, other processing techniques are expressly contemplated.

Incomplete polygonal shaped abrasive particles that include a polymeric material can be characterized as soft abrasive particles. The soft shaped abrasive particles described herein can include any suitable material or combination of materials. For example, the soft shaped abrasive particles can include a reaction product of a polymerizable mixture including one or more polymerizable resins. The one or more polymerizable resins are chosen from a phenolic resin, a urea formaldehyde resin, a urethane resin, a melamine resin, an epoxy resin, a bismaleimide resin, a vinyl ether resin, an aminoplast resin (which may include pendant alpha, beta unsaturated carbonyl groups), an acrylate resin, an acrylated isocyanurate resin, an isocyanurate resin, an acrylated urethane resin, an acrylated epoxy resin, an alkyl resin, a polyester resin, a drying oil, or mixtures thereof. The polymerizable mixture can include additional components such as a plasticizer, an acid catalyst, a cross-linker, a surfactant, a mild-abrasive, a pigment, a catalyst and an antibacterial agent. Softer PSG particles, with Mohs hardness' between 2.0 and 5.0, that can be used for non-scratch applications, can be made according to methods described in WO 2019/215539, published on November 14, 2019.

Where multiple components are present in the polymerizable mixture, those components can account for any suitable weight percentage of the mixture. For example, the polymerizable resin or resins, may be in a range of from about 35 wt% to about 99.9 wt% of the polymerizable mixture, about 40 wt% to about 95 wt%, or less than, equal to, or greater than about 35 wt%, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, or about 99.9 wt%.

If present, the cross-linker may be in a range of from about 2 wt% to about 60 wt% of the polymerizable mixture, from about 5 wt% to about 10 wt%, or less than, equal to, or greater than about 2 wt%, 3, 4, 5, 6, 7, 8, 9, 10, 11, 12, 13, 14, or about 15 wt%. Examples of suitable cross-linkers include a cross-linker available under the trade designation CYMEL 303 LF, of Allnex USA Inc., Alpharetta, Georgia, USA; or a cross-linker available under the trade designation CYMEL 385, of Allnex USA Inc., Alpharetta, Georgia, USA.

If present, the mild-abrasive may be in a range of from about 5 wt% to about 65 wt% of the polymerizable mixture, about 10 wt% to about 20 wt%, or less than, equal to, or greater than about 5 wt%, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, or about 65 wt%. Examples of suitable mild-abrasives include a mild-abrasive available under the trade designation MINSTRON 353 TALC, of Imerys Talc America, Inc., Three Forks, Montana, USA; a mild-abrasive available under the trade designation USG TERRA ALBA NO.1 CALCIUM SULFATE, of USG Corporation, Chicago, Illinois, USA; Recycled Glass (40-70 Grit) available from ESCA Industries, Ltd., Hatfield, Pennsylvania, USA, silica, calcite, nepheline, syenite, calcium carbonate, or mixtures thereof.

If present, the plasticizer may be in a range of from about 5 wt% to about 40 wt% of the polymerizable mixture, about 10 wt% to about 15 wt%, or less than, equal to, or greater than about 5 wt%, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or about 40 wt%. Examples of suitable plasticizers include acrylic resins or styrene butadiene resins. Examples of acrylic resins include an acrylic resin available under the trade designation RHOPLEX GL-618, of DOW Chemical Company, Midland, Michigan, USA; an acrylic resin available under the trade designation HYCAR 2679, of the Lubrizol Corporation, Wickliffe, Ohio, USA; an acrylic resin available under the trade designation HYCAR 26796, of the Lubrizol Corporation, Wickliffe, Ohio, USA; a polyether polyol available under the trade designation ARCOL LG-650, of DOW Chemical Company, Midland, Michigan, USA; or an acrylic resin available under the trade designation HYCAR 26315, of the Lubrizol Corporation, Wickliffe, Ohio, USA. An example of a styrene butadiene resin includes a resin available under the trade designation ROVENE 5900, of Mallard Creek Polymers, Inc., Charlotte, North Carolina, USA.

If present, the acid catalyst may be in a range of from 1 wt% to about 20 wt% of the polymerizable mixture, about 5 wt% to about 10 wt%, or less than, equal to, or greater than about 1 wt%, 2, 3, 4, 5, 6, 7, 8, 9, 10, 11, 12, 13, 14, 15, 16, 17, 18, 19, or about 20 wt%. Examples of suitable acid catalysts include a solution of aluminum chloride or a solution of ammonium chloride.

If present, the surfactant can be in a range of from about 0.001 wt% to about 15 wt% of the polymerizable mixture about 5 wt% to about 10 wt%, less than, equal to, or greater than about 0.001 wt%, 0.01, 0.5, 1, 2, 3, 4, 5, 6, 7, 8, 9, 10, 11, 12, 13, 14, or about 15 wt%. Examples of suitable surfactants include a surfactant available under the trade designation GEMTEX SC-85-P, of Innospec Performance Chemicals, Salisbury, North Carolina, USA; a surfactant available under the trade designation DYNOL 604, of Air Products and Chemicals, Inc., Allentown, Pennsylvania, USA; a surfactant available under the trade designation ACRYSOL RM-8W, of DOW Chemical Company, Midland, Michigan, USA; or a surfactant available under the trade designation XIAMETER AFE 1520, of DOW Chemical Company, Midland, Michigan, USA.

If present, the antimicrobial agent may be in a range of from 0.5 wt% to about 20 wt% of the polymerizable mixture, about 10 wt% to about 15 wt%, or less than, equal to, or greater than about 0.5 wt%, 1, 2, 3, 4, 5, 6, 7, 8, 9, 10, 11, 12, 13, 14, 15, 16, 17, 18, 19, or about 20 wt%. An example of a suitable antimicrobial agent includes zinc pyrithione.

If present, the pigment may be in a range of from about 0.1 wt% to about 10 wt% of the polymerizable mixture, about 3 wt% to about 5 wt%, less than, equal to, or greater than about 0.1 wt%, 0.2, 0.4, 0.6, 0.8, 1, 1.5, 2, 2.5, 3, 3.5, 4, 4.5, 5, 5.5, 6, 6.5, 7, 7.5, 8, 8.5, 9, 9.5, or about 10 wt%. Examples of suitable pigments include a pigment dispersion available under the trade designation SUNSPERSE BLUE 15, of Sun Chemical Corporation, Parsippany, New Jersey, USA; a pigment dispersion available under the trade designation SUNSPERSE VIOLET 23, of Sun Chemical Corporation, Parsippany, New Jersey, USA; a pigment dispersion available under the trade designation SUN BLACK, of Sun Chemical Corporation, Parsippany, New Jersey, USA; or a pigment dispersion available under the trade designation BLUE PIGMENT B2G, of Clariant Ltd., Charlotte, North Carolina, USA.

In addition to the materials already described, at least one magnetic material may be included within or coated to incomplete polygonal shaped abrasive particles. Examples of magnetic materials include iron; cobalt; nickel; various alloys of nickel and iron marketed as Permalloy in various grades; various alloys of iron, nickel and cobalt marketed as Fernico, Kovar, FerNiCo I, or FerNiCo II; various alloys of iron, aluminum, nickel, cobalt, and sometimes also copper and/or titanium marketed as Alnico in various grades; alloys of iron, silicon, and aluminum (about 85:9:6 by weight) marketed as Sendust alloy; Heusler alloys (e.g., Cu₂MnSn); manganese bismuthide (also known as Bismanol); rare earth magnetizable materials such as gadolinium, dysprosium, holmium, europium oxide, alloys of neodymium, iron and boron (e.g., Nd₂Fe₁₄B), and alloys of samarium and cobalt (e.g., SmCo₅); MnSb; MnOFe₂O₃; Y₃Fe₅O₁₂; CrO₂; MnAs; ferrites such as ferrite, magnetite; zinc ferrite; nickel ferrite; cobalt ferrite, magnesium ferrite, barium ferrite, and strontium ferrite; yttrium iron garnet; and combinations of the foregoing. In some embodiments, the magnetizable material is an alloy containing 8 to 12 weight percent aluminum, 15 to 26 wt% nickel, 5 to 24 wt% cobalt, up to 6 wt% copper, up to 1 % titanium, wherein the balance of material to add up to 100 wt% is iron. In some other embodiments, a magnetizable coating can be deposited on an abrasive particle 100 using a vapor deposition technique such as, for example, physical vapor deposition (PVD) including magnetron sputtering.

Including these magnetizable materials can allow incomplete polygonal shaped abrasive particles to be responsive a magnetic field. Any of incomplete polygonal shaped abrasive particles can include the same material or include different materials.

Alignment of abrasive particles may be accomplished using electrostatic coating or magnetic coating, as described in PCT Pat. Appl. Publ. Nos. WO2018/080703 (Nelson et al.), WO2018/080756 (Eckel et al.), WO2018/080704 (Eckel et al.), WO2018/080705 (Adefris et al.), WO2018/080765 (Nelson et al.), WO2018/080784 (Eckel et al.), WO2018/136271 (Eckel et al.), WO2018/134732 (Nienaber et al.), WO2018/080755 (Martinez et al.), WO2018/080799 (Nienaber et al.), WO2018/136269 (Nienaber et al.), WO2018/136268 (Jesme et al.), WO2019/207415 (Nienaber et al.), WO2019/207417 (Eckel et al.), WO2019/207416 (Nienaber et al.), and U.S. Provisional Nos. 62/914,778 filed on October 14, 2019 and 62/875,700 filed July 18, 2019, and 62/924,956, filed October 23, 2019.

An incomplete polygonal shaped abrasive particle is a monolithic abrasive particle. As shown, incomplete polygonal shaped abrasive particles are free of a binder and are not an agglomeration of abrasive particles held together by a binder or other adhesive material.

Incomplete polygonal shaped abrasive particles can be formed in many suitable manners for example, the incomplete polygonal shaped abrasive particles can be made according to a multi-operation process. The process can be carried out using any material or precursor dispersion material. Briefly, for embodiments where incomplete polygonal shaped abrasive particles are monolithic ceramic particles, the process can include the operations of making either a seeded or non-seeded precursor dispersion that can be converted into a corresponding (e.g., a boehmite sol-gel that can be converted to alpha alumina); filling one or more mold cavities having the desired outer shape of incomplete polygonal shaped abrasive particles with a precursor dispersion; drying the precursor dispersion to form precursor shaped abrasive particle; removing the precursor incomplete polygonal shaped abrasive particles from the mold cavities; calcining the precursor incomplete polygonal shaped abrasive particles to form calcined, precursor incomplete polygonal shaped abrasive particles; and then sintering the calcined, precursor incomplete polygonal shaped abrasive particles to form incomplete polygonal shaped abrasive particles. The process will now be described in greater detail in the context of alpha-alumina-containing incomplete polygonal shaped abrasive particles. In other embodiments, the mold cavities may be filled with a melamine to form melamine shaped abrasive particles.

The process can include the operation of providing either a seeded or non-seeded dispersion of a precursor that can be converted into ceramic. In examples where the precursor is seeded, the precursor can be seeded with an oxide of an iron (e.g., FeO). The precursor dispersion can include a liquid that is a volatile component. In one example, the volatile component is water. The dispersion can include a sufficient amount of liquid for the viscosity of the dispersion to be sufficiently low to allow filling mold cavities and replicating the mold surfaces, but not so much liquid as to cause subsequent removal of the liquid from the mold cavity to be prohibitively expensive. In one example, the precursor dispersion includes from 2 percent to 90 percent by weight of the particles that can be converted into ceramic, such as particles of aluminum oxide monohydrate (boehmite), and at least 10 percent by weight, or from 50 percent to 70 percent, or 50 percent to 60 percent, by weight, of the volatile component such as water. Conversely, the precursor dispersion in some embodiments contains from 30 percent to 50 percent, or 40 percent to 50 percent solids by weight.

Examples of suitable precursor dispersions include zirconium oxide sols, vanadium oxide sols, cerium oxide sols, aluminum oxide sols, and combinations thereof. Suitable aluminum oxide dispersions include, for example, boehmite dispersions and other aluminum oxide hydrates dispersions. Boehmite can be prepared by known techniques or can be obtained commercially. Examples of commercially available boehmite include products having the trade designations "DISPERAL" and "DISPAL", both available from Sasol North America, Inc., or "HIQ-40" available from BASF Corporation. These aluminum oxide monohydrates are relatively pure; that is, they include relatively little, if any, hydrate phases other than monohydrates, and have a high surface area.

The physical properties of the resulting polygonal shaped abrasive particles can generally depend upon the type of materials used in the first and second precursor dispersions dispensed in block 210, 220. As used herein, a "gel" is a three-dimensional network of solids dispersed in a liquid.

The precursor dispersions can contain a modifying additive or precursor of a modifying additive. The modifying additive can function to enhance some desirable property of the abrasive particles or increase the effectiveness of the subsequent sintering step. Modifying additives or precursors of modifying additives can be in the form of soluble salts, such as water-soluble salts. They can include a metal-containing compound and can be a precursor of an oxide of magnesium, zinc, iron, silicon, cobalt, nickel, zirconium, hafnium, chromium, yttrium, praseodymium, samarium, ytterbium, neodymium, lanthanum, gadolinium, cerium, dysprosium, erbium, titanium, and mixtures thereof. The particular concentrations of these additives that can be present in the precursor dispersion can be varied.

The introduction of a modifying additive or precursor of a modifying additive can cause the precursor dispersion to gel. The precursor dispersion can also be induced to gel by application of heat over a period of time to reduce the liquid content in the dispersion through evaporation. The precursor dispersion can also contain a nucleating agent. Nucleating agents suitable for this disclosure can include fine particles of alpha alumina, alpha ferric oxide or its precursor, titanium oxides and titanates, chrome oxides, or any other material that will nucleate the transformation. The amount of nucleating agent, if used, should be sufficient to effect the transformation of alpha alumina.

A peptizing agent can be added to the precursor dispersion to produce a more stable hydrosol or colloidal precursor dispersion. Suitable peptizing agents are monoprotic acids or acid compounds such as acetic acid, hydrochloric acid, formic acid, and nitric acid. Multiprotic acids can also be used, but they can rapidly gel the precursor dispersion, making it difficult to handle or to introduce additional components. Some commercial sources of boehmite contain an acid titer (such as absorbed formic or nitric acid) that will assist in forming a stable precursor dispersion.

The precursor dispersion can be formed by any suitable means; for example, in the case of a sol-gel alumina precursor, it can be formed by simply mixing aluminum oxide monohydrate with water containing a peptizing agent or by forming an aluminum oxide monohydrate slurry to which the peptizing agent is added.

Defoamers or other suitable chemicals can be added to reduce the tendency to form bubbles or entrain air while mixing. Additional chemicals such as wetting agents, alcohols, or coupling agents can be added if desired.

A further operation can include providing a mold having at least one mold cavity, or a plurality of cavities formed in at least one major surface of the mold. In some examples, the mold is formed as a production tool, which can be, for example, a belt, a sheet, a continuous web, a coating roll such as a rotogravure roll, a sleeve mounted on a coating roll, or a die. In one example, the production tool can include polymeric material. Examples of suitable polymeric materials include thermoplastics such as polyesters, polycarbonates, poly(ether sulfone), poly(methyl methacrylate), polyurethanes, polyvinylchloride, polyolefin, polystyrene, polypropylene, polyethylene or combinations thereof, or thermosetting materials. In one example, the entire tooling is made from a polymeric or thermoplastic material. In another example, the surfaces of the tooling in contact with the precursor dispersion while the precursor dispersion is drying, such as the surfaces of the plurality of cavities, include polymeric or thermoplastic materials, and other portions of the tooling can be made from other materials. A suitable polymeric coating can be applied to a metal tooling to change its surface tension properties, by way of example.

A polymeric or thermoplastic production tool can be replicated off a metal master tool. The master tool can have the inverse pattern of that desired for the production tool. The master tool can be made in the same manner as the production tool. In one example, the master tool is made out of metal (e.g., nickel) and is diamond-turned. In one example, the master tool is at least partially formed using stereolithography. The polymeric sheet material can be heated along with the master tool such that the polymeric material is embossed with the master tool pattern by pressing the two together. A polymeric or thermoplastic material can also be extruded or cast onto the master tool and then pressed. The thermoplastic material is cooled to solidify and produce the production tool. If a thermoplastic production tool is utilized, then care should be taken not to generate excessive heat that can distort the thermoplastic production tool, limiting its life.

Access to cavities can be from an opening in the top surface or bottom surface of the mold. In some examples, the cavities can extend for the entire thickness of the mold. Alternatively, the cavities can extend only for a portion of the thickness of the mold. In one example, the top surface is substantially parallel to the bottom surface of the mold with the cavities having a substantially uniform depth. At least one side of the mold, the side in which the cavities are formed, can remain exposed to the surrounding atmosphere during the step in which the volatile component is removed.

The cavities have a specified three-dimensional shape to make shaped abrasive particles. The depth dimension is equal to the perpendicular distance from the top surface to the lowermost point on the bottom surface. The depth of a given cavity can be uniform or can vary along its length and/or width. The cavities of a given mold can be of the same shape or of different shapes.

A further operation involves filling the cavities in the mold with the precursor dispersion (e.g., by a conventional technique). In some examples, a knife roll coater or vacuum slot die coater can be used. A mold release agent can be used to aid in removing the particles from the mold if desired. Examples of mold release agents include oils such as peanut oil or mineral oil, fish oil, silicones, polytetrafluoroethylene, zinc stearate, and graphite. In general, a mold release agent such as peanut oil, in a liquid, such as water or alcohol, is applied to the surfaces of the production tooling in contact with the precursor dispersion such that from about 0.1 mg/in² (0.6 mg/cm²) to about 3.0 mg/in² (20 mg/cm²), or from about 0.1 mg/in² (0.6 mg/cm²) to about 5.0 mg/in² (30 mg/cm²), of the mold release agent is present per unit area of the mold when a mold release is desired. In some embodiments, the top surface of the mold is coated with the precursor dispersion. The precursor dispersion can be pumped onto the top surface.

In a further operation, a scraper or leveler bar can be used to force the precursor dispersion fully into the cavity of the mold. The remaining portion of the precursor dispersion that does not enter the cavity can be removed from the top surface of the mold and recycled. In some examples, a small portion of the precursor dispersion can remain on the top surface, and in other examples the top surface is substantially free of the dispersion. The pressure applied by the scraper or leveler bar can be less than 100 psi (0.6 MPa), or less than 50 psi (0.3 MPa), or even less than 10 psi (60 kPa). In some examples, no exposed surface of the precursor dispersion extends substantially beyond the top surface.

A further operation involves removing the volatile component to dry the dispersion. The volatile component can be removed by fast evaporation rates. In some examples, removal of the volatile component by evaporation occurs at temperatures above the boiling point of the volatile component. An upper limit to the drying temperature often depends on the material the mold is made from. For polypropylene tooling, the temperature should be less than the melting point of the plastic. In one example, for a water dispersion of from about 40 to 50 percent solids and a polypropylene mold, the drying temperatures can be from about 90° C to about 165° C, or from about 105° C to about 150° C, or from about 105° C to about 120° C. Higher temperatures can lead to improved production speeds but can also lead to degradation of the polypropylene tooling, limiting its useful life as a mold.

During drying, the precursor dispersion shrinks, often causing retraction from the cavity walls. For example, if the cavities have planar walls, then the resulting shaped abrasive particles can tend to have at least three concave major sides. It is presently discovered that by making the cavity walls concave (whereby the cavity volume is increased) it is possible to obtain incomplete polygonal shaped abrasive particles that have at least three substantially planar major sides. The degree of concavity generally depends on the solids content of the precursor dispersion.

A further operation involves removing resultant precursor incomplete polygonal shaped abrasive particles from the mold cavities. The precursor shaped abrasive particles can be removed from the cavities by using the following processes alone or in combination on the mold: gravity, vibration, ultrasonic vibration, vacuum, or pressurized air to remove the particles from the mold cavities.

The precursor shaped abrasive particles can be further dried outside of the mold. If the precursor dispersion is dried to the desired level in the mold, this additional drying step is not necessary. However, in some instances it can be economical to employ this additional drying step to minimize the time that the precursor dispersion resides in the mold. The polygonal shaped abrasive particles will be dried from 10 to 480 minutes, or from 120 to 400 minutes, at a temperature from 50° C to 160° C, or 120° C to 150° C.

A further operation involves calcining the polygonal shaped abrasive particles. During calcining, essentially all the volatile material is removed, and the various components that were present in the precursor dispersion are transformed into metal oxides. The polygonal shaped abrasive particles are generally heated to a temperature from 400° C to 800° C and maintained within this temperature range until the free water and over 90 percent by weight of any bound volatile material are removed. In an optional step, it can be desirable to introduce the modifying additive by an impregnation process. A water-soluble salt can be introduced by impregnation into the pores of the calcined, precursor shaped abrasive particles. Then the polygonal shaped abrasive particles are pre-fired again.

A further operation can involve sintering the calcined shaped abrasive particles to form particles 100. In some examples where the precursor includes rare earth metals, however, sintering may not be necessary. Prior to sintering, the calcined shaped abrasive particles are not completely densified and thus lack the desired hardness to be used as shaped abrasive particles. Sintering takes place by heating the calcined shaped abrasive particles to a temperature of from 1000° C to 1650° C. The length of time for which the calcined shaped abrasive particles can be exposed to the sintering temperature to achieve this level of conversion depends upon various factors, but from five seconds to 48 hours is possible.

In another embodiment, the duration of the sintering step ranges from one minute to 90 minutes. After sintering, the shaped abrasive particle 14 can have a Vickers hardness of 10 GPa (gigaPascals), 16 GPa, 18 GPa, 20 GPa, or greater.

Additional operations can be used to modify the described process, such as, for example, rapidly heating the material from the calcining temperature to the sintering temperature, and centrifuging the precursor dispersion to remove sludge and/or waste. Moreover, the process can be modified by combining two or more of the process steps if desired.

To form soft shaped abrasive particles the polymerizable mixtures described herein can be deposited in a cavity. The cavity can have a shape corresponding to the negative impression of the desired incomplete polygonal shaped abrasive particles. After the cavity is filled to the desired degree, the polymerizable mixture is cured therein. Curing can occur at room temperature (e.g., about 25 °C) or at any temperature above room temperature. Curing can also be accomplished by exposing the polymerizable mixture to a source of electromagnetic radiation or ultraviolet radiation.

Shaped abrasive particles can be independently sized according to an abrasives industry recognized specified nominal grade. Abrasive industry recognized grading standards include those promulgated by ANSI (American National Standards Institute), FEPA (Federation of European Producers of Abrasives), and JIS (Japanese Industrial Standard). ANSI grade designations (i.e., specified nominal grades) include, for example: ANSI 4, ANSI 6, ANSI 8, ANSI 16, ANSI 24, ANSI 36, ANSI 46, ANSI 54, ANSI 60, ANSI 70, ANSI 80, ANSI 90, ANSI 100, ANSI 120, ANSI 150, ANSI 180, ANSI 220, ANSI 240, ANSI 280, ANSI 320, ANSI 360, ANSI 400, and ANSI 600. FEPA grade designations include F4, F5, F6, F7, F8, F10, F12, F14, F16, F18, F20, F22, F24, F30, F36, F40, F46, F54, F60, F70, F80, F90, F100, F120, F150, F180, F220, F230, F240, F280, F320, F360, F400, F500, F600, F800, F1000, F1200, F1500, and F2000. JIS grade designations include JIS8, JIS12, JIS16, JIS24, JIS36, JIS46, JIS54, JIS60, JIS80, JIS100, JIS150, JIS180, JIS220, JIS240, JIS280, JIS320, JIS360, JIS400, JIS600, JIS800, JIS1000, JIS1500, JIS2500, JIS4000, JIS6000, JIS8000, and JIS10,000.

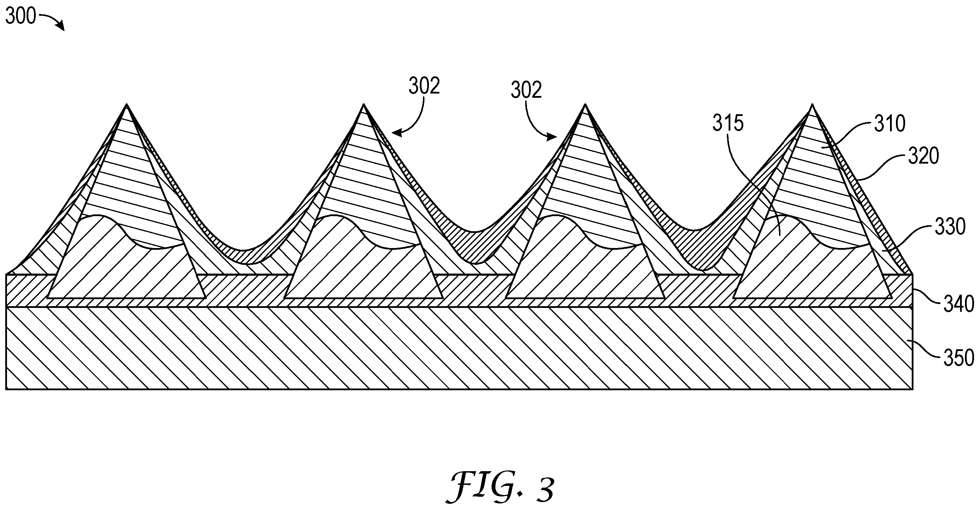

FIG. 3 illustrates an example of a coated abrasive article in which embodiments disclosed herein may be useful. According to various embodiments of the present disclosure, a coated abrasive article is disclosed. The abrasive article can be chosen from many different abrasive articles such as an abrasive belt, an abrasive sheet or an abrasive disc. However, while a coated abrasive article is illustrated in FIG. 3, other abrasive articles are also envisioned, such as a bonded abrasive article, a bonded abrasive article, or an abrasive brush.

FIG. 3 is a sectional view of a coated abrasive article 300. The coated abrasive article 300 includes a backing 350 defining a substantially planar major surface along an x-y direction. Backing 350 has a first layer of binder 340, which may be referred to as a make coat 340, applied over a first surface of the backing 350. Attached or partially embedded in the make coat 340 are a plurality of shaped abrasive particles, each with a first portion 310 and a second portion 315. A second layer of binder 330, hereinafter referred to as a size coat 330, is dispersed over the shaped abrasive particles. The coated abrasive article 300 can be formed to be any suitable abrasive article.

Backing 350 can be flexible or rigid. Examples of suitable materials for forming a flexible backing include a polymeric film, a metal foil, a woven fabric, a knitted fabric, paper, vulcanized fiber, a staple fiber, a continuous fiber, a nonwoven, a foam, a screen, a laminate, and combinations thereof. Backing 350 can be shaped to allow coated abrasive article 300 to be in the form of sheets, discs, belts, pads, or rolls. In some embodiments, backing 350 can be sufficiently flexible to allow coated abrasive article 300 to be formed into a loop to make an abrasive belt that can be run on suitable grinding equipment.

Make coat 340 secures the shaped abrasive particles to backing 350, and a size coat 330 can help to reinforce particles within size make coat 340. Make coat 340 and/or the size coat 330 can include a resinous adhesive. The resinous adhesive can include one or more resins chosen from a phenolic resin, an epoxy resin, a urea-formaldehyde resin, an acrylate resin, an aminoplast resin, a melamine resin, an acrylated epoxy resin, a urethane resin, and mixtures thereof.

As illustrated herein are shaped abrasive particles with a first portion 315 that is embedded within make coat 340, and a second portion 310 which is substantially free from contact with make coat 340. This may be beneficial if first portion 315 is formed of a material more likely to bond with make resin 340. Second portion 310 may have better cut properties, or may be more expensive than first portion 315 and, therefore, may only occupy a volume of the shaped abrasive particle likely to be sued in an abrasive operation. However, while shaped abrasive particles with portions 310 and 315 are illustrated, other shaped abrasive particles, such as those of FIGS. 1A and 1C, may also be suitable.

Various methods can be used to make any of the abrasive articles of the present disclosure. For example, the coated abrasive article 300, can be formed by applying make coat 340 on backing 350. Make coat 340 can be applied by any suitable technique such as roll coating. Shaped abrasive particles can then be deposited on make coat 340. Alternatively, abrasive particles and make coat 340 formulation can be mixed to form a slurry, which is then applied to backing 350. If coated abrasive article 300 includes other shaped abrasive particles, crushed abrasive particles, and secondary shaped abrasive particles, those particles can be applied as discrete groups sorted by particle type, or together. Shaped abrasive particles 302 are deposited on backing 350, make coat 340 is cured at an elevated temperature or at room temperature for a set amount of time and shaped abrasive particles 302 adhere to backing 350. A size coat 330 can then be optionally applied over the coated abrasive article 300.

Abrasive particles 302 can be deposited on backing 350 through any suitable technique. For example, abrasive particles 302 can be deposited through a drop-coating technique or an electrostatic-coating technique onto backing 350. In drop-coating, abrasive particles 302 are free-form deposited on make coat 340. In an example of an electrostatic - coating technique, an electrostatically charged vibratory feeder can be used to propel abrasive particles 302 off of a feeding surface towards a conductive member located behind backing 350. In some embodiments, the feeding surface can be substantially horizontal and the coated backing can be traveling substantially vertically. Abrasive particles 302 pick up a charge from the feeder and are drawn towards the backing by the conductive member.

Shaped abrasive particles 302 can account for 100 wt% of the abrasive particles in any abrasive article. Alternatively, shaped abrasive particles 302 can be part of a blend of abrasive particles distributed on backing 350. If present as part of a blend, shaped abrasive particles may be in a range of from about 5 wt% to about 95 wt% of the blend, about 10 wt% to about 80 wt%, about 30 wt% to about 50 wt%, or less than, equal to, or greater than about, 5 wt%, 10, 15, 20, 25, 30, 35, 40, 45, 50, 55, 60, 65, 70, 75, 80, 85, 90, or about 95 wt%, of the blend. In the blend, the balance of the abrasive particles may include conventional crushed abrasive particles. Crushed abrasive particles are generally formed through a mechanical crushing operation and have no replicated shape. The balance of the abrasive particles can also include other shaped abrasive particles, that may for example, include an equilateral triangular shape (e.g., a flat triangular shaped abrasive particle or a tetrahedral shaped abrasive particle in which each major face of the tetrahedron is an equilateral triangle).

The make coat, size coat, or both can include any suitable resin such as a phenolic resin, an epoxy resin, a urea-formaldehyde resin, an acrylate resin, an aminoplast resin, a melamine resin, an acrylated epoxy resin, a urethane resin, or mixtures thereof. Additionally, the make coat, size coat, or both can include a filler, a grinding aid, a wetting agent, a surfactant, a dye, a pigment, a coupling agent, an adhesion promoter, or a mixture thereof. Examples of fillers may include calcium carbonate, silica, talc, clay, calcium metasilicate, dolomite, aluminum sulfate, or a mixture thereof.

A distribution tool may also be used to apply shaped abrasive particles 302 to backing 350. The distribution tool including shaped abrasive particles can be left in contact with the backing for any suitable amount of time as shaped abrasive 302 adhere to the make coat. After sufficient time has passed for good adhesion between shaped abrasive particles and the make coat, the production tool is removed and a size coat is optionally disposed over the shaped abrasive particles.

The shaped abrasive particles described herein can also be used to form aggregate particles. The aggregate particles may include shaped abrasive particles in a vitreous bond matrix as described, for example, in U.S. PAP 2018/081246, published on May 3, 2018. The aggregate particles may also include shaped abrasive particles in a silicate binder, as described in WO 2019/167022, published on September 6, 2019.

Alignment of abrasive particles may be accomplished using electrostatic coating or magnetic coating, as described in PCT Pat. Appl. Publ. Nos. WO2018/080703 (Nelson et al.), WO2018/080756 (Eckel et al.), WO2018/080704 (Eckel et al.), WO2018/080705 (Adefris et al.), WO2018/080765 (Nelson et al.), WO2018/080784 (Eckel et al.), WO2018/136271 (Eckel et al.), WO2018/134732 (Nienaber et al.), WO2018/080755 (Martinez et al.), WO2018/080799 (Nienaber et al.), WO2018/136269 (Nienaber et al.), WO2018/136268 (Jesme et al.), WO2019/207415 (Nienaber et al.), WO2019/207417 (Eckel et al.), WO2019/207416 (Nienaber et al.), and U.S. Provisional Nos. 62/914,778 filed on October 14, 2019 and 62/875,700 filed July 18, 2019, and 62/924,956, filed October 23, 2019.

Magnetic coatings may be applied before a firing process or after a firing process. The magnetic coating may cause the shaped abrasive particles to align in a magnetic field. The shaped abrasive particles may align such that one of the vertices are pointing away from the backing. Once the magnetizable particles are coated on to the curable binder precursor it is at least partially cured at a first curing station (not shown), so as to firmly retain the magnetizable particles in position. In some embodiments, additional magnetizable and/or non-magnetizable particles (e.g., filler abrasive particle and/or grinding aid particles) can be applied to the make layer precursor prior to curing.

In the case of a coated abrasive article, the curable binder precursor includes a make layer precursor, and the magnetizable particles include magnetizable abrasive particles. A size layer precursor may be applied over the at least partially cured make layer precursor and the magnetizable abrasive particles, although this is not a requirement. If present, the size layer precursor is then at least partially cured at a second curing station, optionally with further curing of the at least partially cured make layer precursor. In some embodiments, a supersize layer 320 is disposed on the at least partially cured size layer precursor.

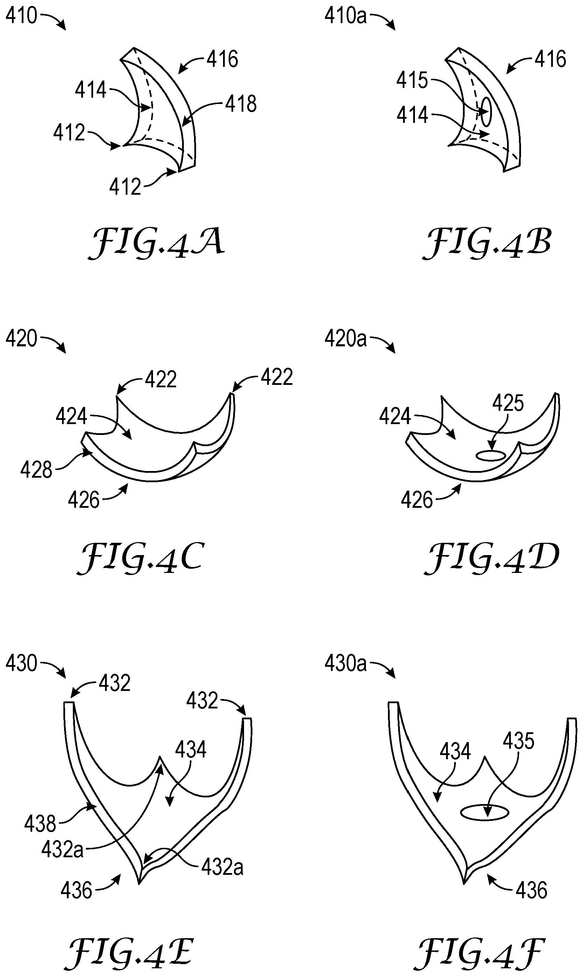

FIGS. 4A-4F illustrate curved polyhedral shaped abrasive particles in accordance with embodiments herein. While FIGS. 1-3 illustrate shaped abrasive particles with a first and second portion that are remain in contact through particle formation, article manufacture, and abrasive use, it is expressly contemplated that multiphase shaped abrasive particles may also be constructed such that the phases are separable at the interface.

FIGS. 4A-4F illustrate curved shaped abrasive particles in accordance with embodiments herein. FIGS. 4A-4F illustrate curved polyhedral shaped abrasive particles made using a mold with a planar surface. However, other shapes could be possible using molds with other internal surface. Additionally, while smooth edges and are illustrated, it may be possible to create grooves or other textures on any surface of an abrasive particle that contacts the mold surface during drying or other treatment.

FIGS. 4A and 4B illustrate curved abrasive particles 410 and 410a, which differ in the presence or absence of an aperture 415 which may extend partially or completely through a thickness 418. Abrasive particles 410 and 410a are formed of a layer of abrasive particle precursor with a thickness 418 that, during drying, has been induced to partially curl into a curved shape such that a surface area of an interior side 414 is smaller than an exterior surface area of an exterior side 416. Sides 414 and 416 are substantially parallel to each other. Shaped abrasive particles can also have at least one recessed (or concave) face or facet; at least one face or facet which is shaped outwardly (or convex). Methods for making dish-shaped abrasive particles are for example described in US Patent Application Publication Nos. 2010/0151195 and 2009/0165394. Additionally, shaped abrasive particles may also have a multifaceted surface as described in U.S. Pat. 10,150,900, issued on December 11, 2018.

Particles 410 and 410a each include one or more abrasive tips 412. In some embodiments, as illustrated in FIGS. 4A-4D, abrasive tips 412 (or 422) are all within a plane.

An amount of curvature of an abrasive particle may be determined by the amount of shrinkage, and the different rate of shrinkage, of the interior surface 414 with respect to the exterior layer 416. The degree of the curvature of an abrasive particle can also be determined by the thickness of precursor particles. For example, if a precursor particle has an uneven thickness, the thinner section will curve more than that of the thicker section due to less resistance from the particle body. This also allows to design abrasive particle with desired curvature structures.

FIGS. 4C and 4D illustrate curved abrasive particles 420 and 420a, which differ in the presence of an aperture, 425 which may extend partway or completely through thickness 428. Particles 420 and 420a include a plurality of abrading tips 422. Particles 420 and 420a also include an interior surface 424 and an exterior surface 426. Exterior surface 426 has a larger surface area than surface 424, which may be caused by differential shrinkage rates of surfaces 424, 426 during drying.

FIGS. 4E and 4F illustrate curved abrasive particles 430 and 430a, which differ in the presence of an aperture 435, which may extend partway or completely through thickness 638. Curved abrasive particles 430 and 430a each have four abrading tips 432, two (432a) that are substantially planar with aperture 435, and two that are present on curved areas of particles 430, 430a. Particles 430 and 430a has a thickness 438 that is substantially consistent along its area. An internal surface 434 has an area that is smaller than external surface 436, which is caused by a variation in shrinkage rates between surfaces 434, 436 during drying.

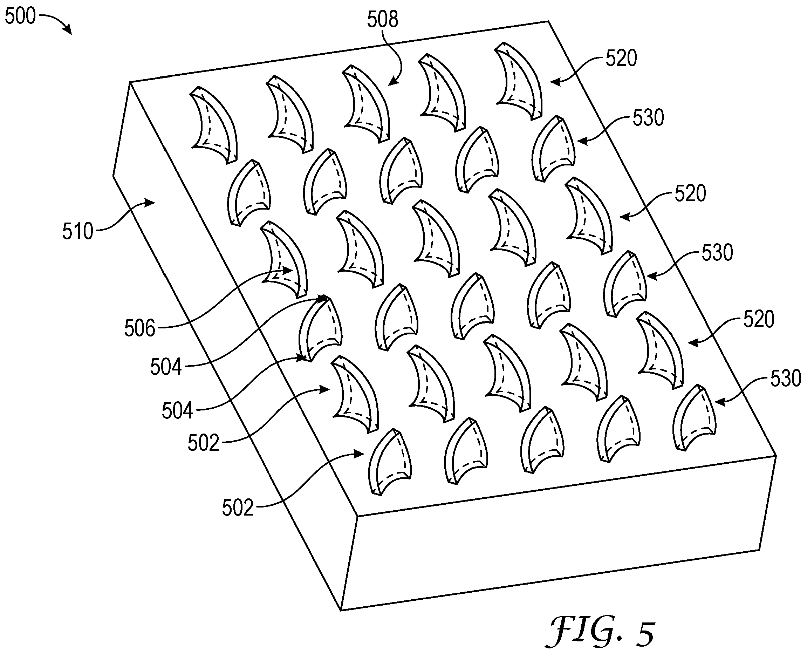

FIG. 5 illustrates curved polyhedral shaped abrasive particles precisely placed on a surface in an embodiment herein. While particles 502 are illustrated as similar to particles 400, other curved shapes, including those of FIGS. 4B-4F, are also envisioned.

An abrasive article 500 may include a substrate 510 with a plurality of curved abrasive particles 502 positioned thereon. Curved abrasive particles 520 each have a plurality of abrasive tips 504, each of which are oriented toward an interior surface 506 of the curved abrasive particles 502. Interior surface 506 may be substantially parallel to external surface 508 for each curved abrasive particle 502.

As illustrated in FIG. 5, abrasive particles may be precisely placed in a first orientation 520 or a second orientation 530. However, other orientations are also possible. In some embodiments, an abrasive article includes abrasive particles all oriented in a single orientation. In another embodiment, an abrasive particle may include abrasive particles in a variety of orientations. However, as described herein, abrasive particles may be magnetically coated, or otherwise configured to be aligned in precise positions on substrate 510.

The mechanism for forming convex/concave face is that when more mold release agent is present or an excess of mold release agent is present on the surfaces of the tooling in contact with the sol-gel, the precursor shaped abrasive particles tend to release from the bottom surface of the mold during drying thereby forming convex/concave faces on the dish-shaped abrasive particles.

The mechanism for forming curved PSG disclosed differs from than that of the mechanisms described in prior art, for example U.S. Patent No. 8,142,891, issued on March 27, 2012, in that the articles described herein are formed by controlling the gradient volume shrinkage of the gel particle during drying.

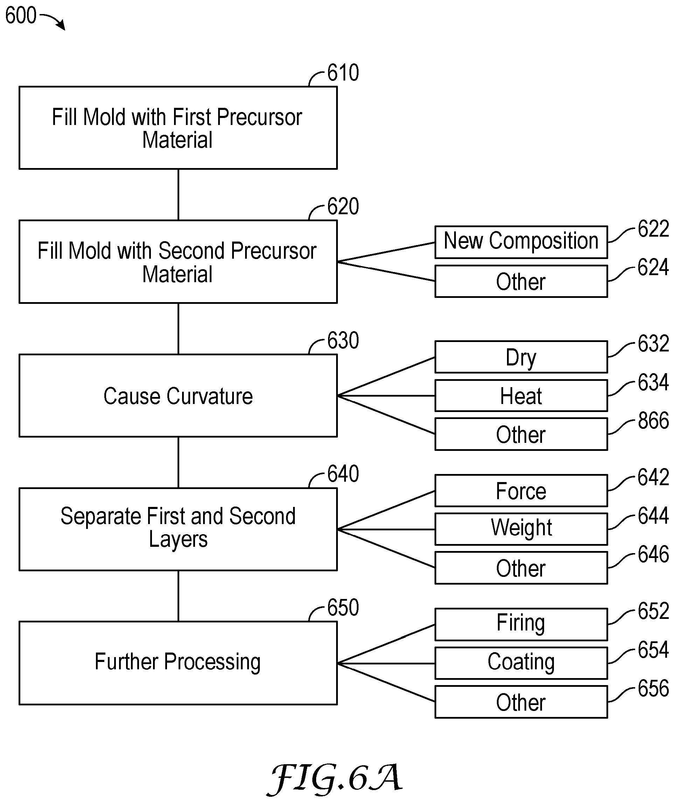

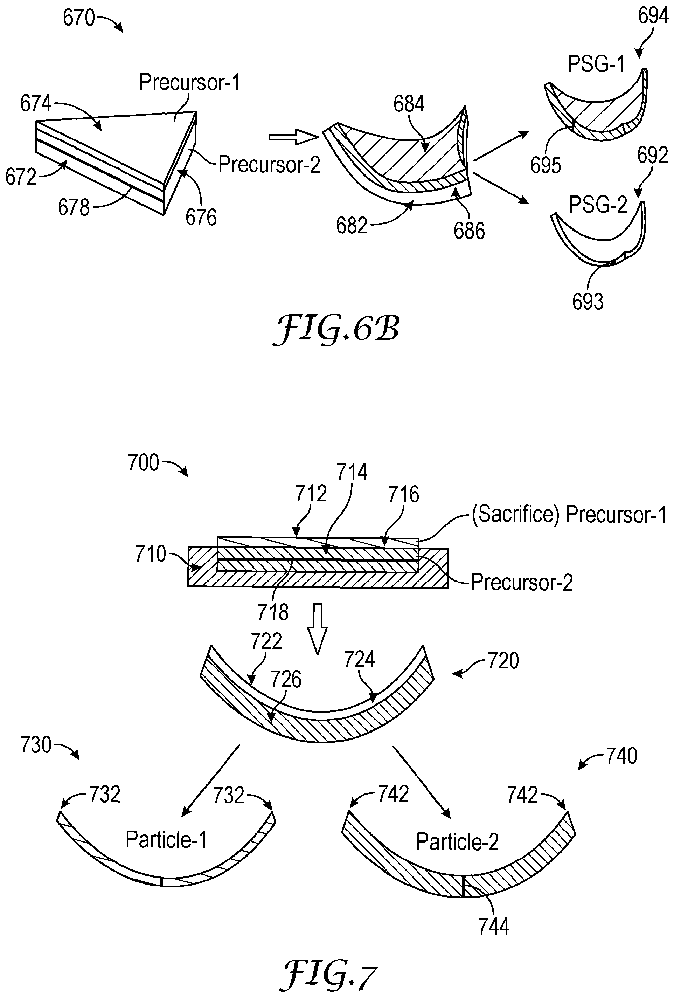

FIGS. 6A and 6B illustrate a method of making a curved polyhedral shaped abrasive particle in embodiments herein. Method 600 allows for making curved precision shaped abrasive particles with well-controlled curvature. In one embodiment, we show a process allows for making two different PSG particles through one path. The methods described herein may allow for thinner abrasive particles than would otherwise be easily made in a mold.

In block 610, a mold cavity is filled with a first precursor material. The precursor material may be dispensed into the mold such that it covers a bottom surface of the mold, but does not completely fill the mold.

In block 620, the mold cavity is filled with a second precursor material. The second precursor material may have the same composition as the first layer, or may have a different composition 622 as the first material. For example, the first material may be alpha alumina while the second material is zirconia alumina. Other compositions, doped compositions, or mixtures are expressly contemplated. The second precursor material may also be another material not intended for abrasive usage 624, such as a polymer or other material that facilitates curvature during drying.

In some embodiments, the second precursor material is selected such that minimal mixing will occur at an interface between the two layers, such that the two layers can be separated, in block 640, for example. However, in some embodiments, some mixing, fusing or other bonding occurs such that the layers do not easily separate.

In block 630, curvature is induced in the abrasive particle. Curvature may be caused by drying the particle, as indicated in block 632, in such a way that one of the first and second layers dries faster than the other, causing curling at the edges. Heating may also be applied, as indicated in block 634. Other methods are also contemplated, as indicated in block 636.

In block 640, in some embodiments, the first and second layers are separated. In some embodiments, only one layer will be used for forming abrasive articles, so when the abrasive particle precursors are removed from the mold cavities, they need to be separated into the portions that will be incorporated into abrasive articles, and the portions that will be discarded. Physical separation of the first and second layers from each other may occur easily during removal from the mold, or may require some force 642. For example, the mold may be subjected to vibrations to induce separation of the layers from each other. It may also help separating the portions that will be kept from those to be discarded. The layers may also be separated by weight 644, or using another mechanism 646.

In block 650, the curved abrasive particles are further processed. Processing may include preparing the curved abrasive particles for incorporation into abrasive articles. For example, the curved abrasive particles may be further dried or fired, as indicated in block 652. The abrasive particles may also undergo a coating step, as indicated in block 654. For example, coating the abrasive particles with a magnetically responsive coating layer may make precise alignment on a backing or other substrate possible. Other processing, as indicated in block 656, may also be done.

FIG. 6B shows a schematic 670 that illustrates the formation of a curved abrasive particle 692 and a discarded layer 694. However, while a top layer 694 is illustrated in FIG. 6B as the discarded layer, in other embodiments it may be abrasive particle 892 that is discarded. For example, a sacrificial precursor layer may be easier to remove from a mold and, therefore, used as a mold contacting layer.

A mold is first filled with a first layer of precursor material 672, and then a second layer of precursor material 674. An interface 676 may be present between the first and second layers 672, 674.

A drying step causes the two layers to curl, resulting from a bottom layer 682 drying at a different rate than top layer 684. The convex/concave formation of layers 682, 684 is due to the gradient volume shrinking during gel drying. For example, if the surface layer of the gel dries faster than that of the inside of portion of the gel particle and its volume shrinks more than that of the inside portion of the gel particles, leads to the formation of convex/concave surfaces. The gradient volume shrinking can be achieved by gradient solid, gradient temperature, or by using gel/slurry precursor mixtures with different dry speed or volume shrinkage. The top layer could be a temporary sacrifice layer or the same composition as the inside layer of the gel. In one embodiment, a temporary sacrifice layer 684 is used. In another embodiment, a precursor slurry with two different solids content generates gradient drying/shrinking to form convex/concave structures.

When drying is complete, the two layers separate at interface 886 to form particle portions 692 and 694. Particle portions 694 and 692 may both comprise ceramic material or, in other embodiments, a sacrificial portion may comprise a polymer or other softer material. A suitable temporary sacrifice layer is a material that is a combustible or soluble material can be removed after the particle was made. A common way to eliminate the temporary sacrifice layer is by burning out the layer during pre-firing, firing or sintering. Typical temporary sacrifice layer are polymer layers such as starch, poly vinyl alcohol, celluloses, and gelatin. In one embodiment, a poly vinyl alcohol (PVA) solution (5-10% by weight) was used as typical temporary sacrifice layer.

Particle 670 has an edge length 678. Edge length 678 is similar to an edge length of particles 692, 694, with some change as a result of the curvature. Throughout the area of particles 692, 694, a thickness 693, 695, respectively, is substantially constant.

FIG. 6B illustrates the formation of curved polyhedral abrasive particles. While triangular-shaped particles with curvature are illustrated, it is expressly contemplated that other shaped mold cavities could be used, resulting in other curved shapes. For example, a quadrilateral shaped mold cavity could be used to form a curved particle with four corners, where the four corners curve upwards, similar to the illustrations of FIGS. 4A-4F. Similarly, a pentagonal, hexagonal, heptagonal, octagonal, nonagonal, or other suitable polyhedral shaped mold cavity could be used to create a particle with any number of curved points.

Similarly, methods described herein can be used to induce curvature in rod-shaped, or other elongated shaped particles. Elongated abrasive particles can be used, for example, in grinding wheels, particularly for use in use in heavy duty snagging operations. International Patent Publication No. WO 2019/069157, published on April 11, 2019 discloses a method of making elongated abrasive particles with precisely controlled linear longitudinal shapes. Disclosed herein is a method of making curved elongate shaped abrasive particles. The particles described herein have curvature on both an interior and an exterior side and, in some embodiments, the curvature on the interior and exterior surfaces are substantially similar, resulting in a particle with substantially constant thickness along a length.

FIG. 7 shows a schematic 700 that illustrates the formation of a curved abrasive particle 740, with abrasive edges 742 and a second abrasive particle layer 730, with abrasive edges 732. In some embodiments, second particle layer 730 is added only to induce curvature in abrasive particle 742, and is discarded after formation. However, while a top layer 712 is illustrated in FIG. 6C as the discarded layer, in other embodiments it may be the bottom layer 714, that contacts the mold, which is discarded. For example, a sacrificial precursor layer may be easier to remove from a mold and, therefore, used as a mold contacting layer. For example, the sacrificial layer 730 may be a slurry and the abrasive particle layer 740 is a boehmite gel.

A mold 710 is first filled with a first layer of precursor material 714, and then a second layer of precursor material 712. An interface 714 may be present between the first and second layers 714, 712.

A drying step causes the two layers to curl, resulting from a bottom layer 726 drying at a different rate than top layer 722. The convex/concave formation of layers 722, 726 is due to the gradient volume shrinking during gel drying. As discussed above, in some embodiments one of layers 722, 726 is a sacrificial layer. The sacrificial layer may be formed of an abrasive particle material, another ceramic material, or a non-ceramic material, such as a polymer or plastic material. When drying is complete, the two layers separate at interface 724 to form particle portions 730, 740.

While in the mold, particles 712 and 714 have a length 718. Length 718 may be similar to a length of particles 722 and 726. Each of the final particles 730, 740 also have a final particle thickness 734, 744.

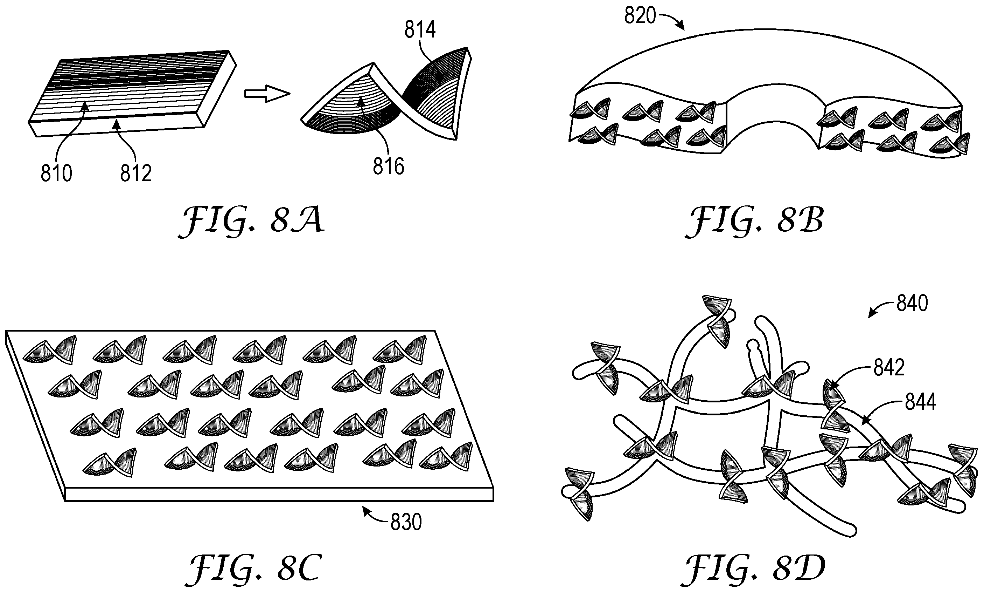

FIGS. 8A-8D illustrate twisted abrasive particles and abrasive articles in which they may be useful. FIGS. 1-7 illustrate particles with a plurality of sharp tips or edges that are all directed in substantially the same direction after a drying step and only one concave shape is present as a result.

In contrast, FIGS. 8A-8D illustrate abrasive particles that, as a result of drying, have a twisted shape, such that, when placed on a backing, as illustrated in FIG. 8C, only two abrasive tips face away from the backing and two are used as stabilizing features.

As illustrated in FIG. 8A, in one embodiment a rectangular shaped abrasive particle precursor can self-align into a self-standing abrasive particle with a cutting tip pointing upwards in the standing position. Precursor particles with twisted structures can be achieved by using more than two phase materials. In one embodiment, a sacrificial layer was applied onto both the surface of the alumina precursor gel particle to form a sandwich like structure. When the sample was placed into the oven for drying, the two sides of the precursor gel particle dries differently: the side exposed to air dries faster than that of the side in the bottom of the cavities. The particle curves towards the surface exposed to air. Once the precursor particles were released from the tool, the side facing the tool starts to dry and the particles curved accordingly. As a result, the dried precursor gel become a twisted particle. A first layer 810 may be deposited on a second layer 812 and, during a drying step, have a different drying rate that causes curvature resulting in a first surface 814 and a second surface 816. A thickness between first and second surfaces 814, 816 is substantially the same across the surface 814. The first layer 810 could be a ceramic layer or a polymer layer.

FIGS. 8B-8D illustrate how such a particle might be used in abrasive articles such as a bonded abrasive article 820, a coated abrasive article 830, and a nonwoven abrasive article 840. Such a particle may be particularly useful in abrasive articles as, for nonwoven articles, additional surface area may result in greater bonding area between a particle 842 and a nonwoven fiber 844. In a bonded abrasive article, such particles may increase the availability of abrasive tips during an abrasive operation for a variety of wheel designs. And, for coated abrasive articles, such a shape may self-orient on a backing.

The shaped abrasive particles are typically selected to have a length in a range of from 0.001 mm to 26 mm, more typically 0.1 mm to 10 mm, and more typically 0.5 mm to 5 mm, although other lengths may also be used.

According to various embodiments, a method of using an abrasive article such as an abrasive belt or an abrasive disc includes contacting the incomplete polygonal shaped abrasive particles with a workpiece or substrate. The workpiece or substrate can include many different materials such as steel, steel alloy, aluminum, plastic, wood, or a combination thereof. Upon contact, one of the abrasive article and the workpiece is moved relative to one another in direction of use and a portion of the workpiece is removed.

The present invention relates to a method for abrading a workpiece, the method comprising frictionally contacting at least a portion of an abrasive article according to the invention with a surface of a workplace; and moving at least one of the workpiece or the abrasive article (while in contact) to abrade at least a portion of the surface of the workpiece.

During use, the abrasive article can be used dry or wet. During wet grinding, the abrasive article is typically used in conjunction with a grinding fluid which may for example contain water or commercially available lubricants (also referred to as coolants). During wet grinding lubricants are commonly used to cool the workpiece and the abrasive article, lubricate the interface, remove swarf (chips), and clean the abrasive article. The lubricant is typically applied directly to the grinding area to ensure that the fluid is not carried away by the abrasive article. The type of lubrication used depends on the workpiece material and can be selected as is known in the art. One advantage of using incomplete polygonal abrasive particles is their ability to incorporate and retain lubricant within the empty spaces within their structure.

Common lubricants can be classified based on their ability to mix with water. A first class suitable for use in the present invention includes oils, such as mineral oils (typically petroleum-based oils) and plant oils. A second class suitably for use in the present invention includes emulsions of lubricants (for example mineral oil-based lubricants; plant oil-based lubricants and semi-synthetic lubricants) and solutions of lubricants (typically semi-synthetic and synthetic lubricants) with, water.

Curved abrasive particles may provide significant advantages over other shaped abrasive particles. Curved abrasive particles may allow for better adhesion of the particles within an abrasive article structure. The improved adhesion may result in reduced shelling as compared to flat, or 2D polygonal shaped particles. Curved abrasive particles may better align within an abrasive article structure, with either easier orientation or self-orientation. The open structures of the curved abrasive particles offer better anti-loading performance than that of comparative complete particles. The term "loading" is used in the sandpaper industry to refer to a product that can be clogged or gummed up due to residue filling up the inter-spaces between abrasive particles with small particles of the material being sanded, making the sandpaper work much harder or to even ruin it (end lifespan). Another feature of curved shaped abrasive particles is that the empty interior space can be filled with grinding aids, for example lubricants.

### Examples

Objects and advantages of this disclosure are further illustrated by the following non-limiting examples, but the particular materials and amounts thereof recited in these examples, as well as other conditions and details, should not be construed to unduly limit this disclosure. Unless otherwise noted, all parts, percentages, ratios, etc. in the Examples and the rest of the specification are by weight.

Unless stated otherwise, all other reagents were obtained, or are available from fine chemical vendors such as Sigma-Aldrich Company, St. Louis, Missouri, or may be synthesized by known methods.

Unit Abbreviations used in the Examples:

| | |
|---|---|
| °C: | degrees Centigrade |
| cm: | centimeter |
| g: | gram |
| g/m²: | grams per square meter |
| rpm: | revolutions per minute |
| mm: | millimeter |
| wt. %: | weight percent |

Materials used in the Examples are described in Table 1, below.

**Table 1**

| | |
|---|---|
| SAP | Precision shaped abrasive particles. Examples of SAP were described in U. S. Pat. No. 8,142,531 (Adefris et al), and U. S. Pat. Appl. No. 2015/0267097 A1 (Rosenflanz et al). The shaped abrasive particles were prepared by molding the ceramic precursor pre-Mix in equilateral triangle-shaped polypropylene mold cavities. After drying and firing, the resulting shaped abrasive particles were about 0.18 mm (side length) × 0.04 mm thick, with a draft angle approximately 98 degrees. |
| Molded production tool | The making process involves providing a molded production tool having at least one precision shaped mold cavity, and preferably a plurality of precision shaped mold cavities. The mold can have a generally planar bottom surface and a plurality of mold cavities. The plurality of precision shaped mold cavities can be formed in a production tool. The production tool can be a belt, a sheet, a continuous web, a coating roll such as a rotogravure roll, a sleeve mounted on a coating roll, or die. The cavity has a specified three-dimensional shape. In one embodiment, the shape of a cavity can be described as being a triangle. Alternatively, other cavity shapes can be used, such as, rectangles, squares, hexagons, stars, or combinations thereof. The production tool described in WO application WO/2018/207145 were used to make tetrahedral shaped abrasive particles. |
| Zr-Al-Sol-Gel Precursor pre-Mix | In general, a Zr-seeded Al-Sol-Gel Precursor pre-Mix was made using the following recipe: aluminmu oxide monohydrate powder (1600 parts) having the trade designation "DISPERAL" was dispersed by high shear mixing a solution containing water (2300 parts), 50 parts alumina seed solution, 25 parts Zirconia seed solution (reported as Zirconia 2% in total Alumina), 25 parts magnesium precursor solution (reported as MgO 2% in total Alumina), and 70 percent aqueous nitric acid (72 parts) for 10-20 minutes. The resulting sol-gel was aged for at least one hour before coating. The Zr-Al-Sol-Gel Precursor pre-Mix comprising about 40% solid and roughly 60% water. |
| Al-Sol-Gel Precursor pre-Mix | In general, Al-Sol-Gel Precursor pre-Mix is a dispersion comprising water, colloid alumina source, and optionally peptizing agent (e.g., an acid such as nitric acid) as described in US patent US6287353. An example of precursor sol-gel mixture was made using the following recipe: aluminum oxide monohydrate powder (1600 parts) having the trade designation "DISPERAL' (Sasol Chemicals North America LLC, Houston, Texas) was dispersed by high shear mixing a solution containing water (2400 parts) and 70% aqueous nitric acid (72 parts) for 11 minutes. The resulting Sol-gel precursor was aged for at least 1 hour before use. The Al-Sol-Gel Precursor pre-Mix comprising about 40% solid and roughly 60% water. |
| Slurry Precursor Pre-Mix | In general, Slurry Precursor Pre-Mix is a dispersion comprising water, non-colloidal alumina powder source, and optionally stabilizing agent and temporary binder, as described in U. S. Pat. Appl. No. 2015/0267097 A1. The Slurry Precursor Pre-Mix comprising about 78% solid and roughly 12% water. |
| RA | Mold releasing agent. In many embodiments, a mold release agent may include in the precursor pre-mix or coat onto the mold surface as disclosed in WO2014070468A1 (Rosenflanz, et al), to aid in removing the shaped abrasive precursor particles from the substrate, if desired. Typical mold release agents include oils such as peanut oil or mineral oil, fish oil, silicones, polytetrafluoroethylene (ptfe), zinc stearate, and graphite. In general, a mold release agent such as peanut oil, in a liquid, such as water or alcohol, is applied to the surfaces of the production tooling in contact with the slurry such that between about 0.1 mg/in^ (0.6 mg/crn^) to about 3.0 mg/in^ (20 mg/cm^), or between about 0.1 mg/in^ (0.6 mg/cm^) to about 5.0 mg/in^ (30 mg/cm^) of the mold release agent is present when a mold release is desired. Unless otherwise noted, the release agent solution is 0.2% peanut oil in methanol by weight. |
| TSL | TSL (Temporary sacrifice layer). Typical temporary sacrifice layer are polymer layers such as starch, poly vinyl alcohol, celluloses, and gelatin. In one embodiment, a poly vinyl alcohol (PVA) solution (5-10% by weight) was used as typical temporary sacrifice layer. |
| Fiber disc backing | Precut vulcanized fibre discs blanks with a diameter of 17.8cm, a center hole of 2.2 cm and thickness of 0.83mm were obtained under trade designation "Dynos Vulcanized Fibre" from DYNOS GMBH, Troisdorf, Germany. |
| PF1 | Phenol-formaldehyde resin having a phenol to formaldehyde molar ratio of 1:1.5-2.1, and catalyzed with 2.5 percent by weight potassium hydroxide. |
| ER1 | Aqueous Epoxy dispersion commercially available under the trade name "EPI-REZ^{™} 3522-W60" from Hexion Specialty Chemical, Inc., Louisville, Kentucky |
| CACO | Calcium Carbonate commercially available under trade name "Hubercarb Q325" from Hubercarb Engineered Materials, Atlanta Georgia. |
| CRY | Cryolite, obtained under the trade designation "CRYOLITE RTN-C" from Freebee A/S, Ullerslev, Denmark. |
| IO | Red iron oxide pigment, obtained under the trade designation "KROMA RO-3097" from Elementis Specialties, Inc., East Saint Louis, Illinois. |
| EC1 | 2-Ethyl-4-methyl imidazole, obtained under the trade designation "EMI-2,4" from Air Products, Allentown, Pennsylvania |
| Make resin 1 | The Phenolic make resin 1 was prepared by mixing 49.2 parts by weight of PF1; 40.6 parts by weight of CACO; and 10.2 parts by weight of deionized water. |
| Size Resin 1 | The Phenolic Size Resin 1 was prepared by mixing 40.6 parts by weight of PF1; 69.9 parts by weight of CRY; 2.5 parts by weight IO; and 25 parts by weight deionized water. |
| Keyence | Optical microscope, VK-5000 made by Keyence Corporation (USA) |
| SEM | Scanning Electron Microscope, JSM-7610F, JEOL Ltd. (Japan) |

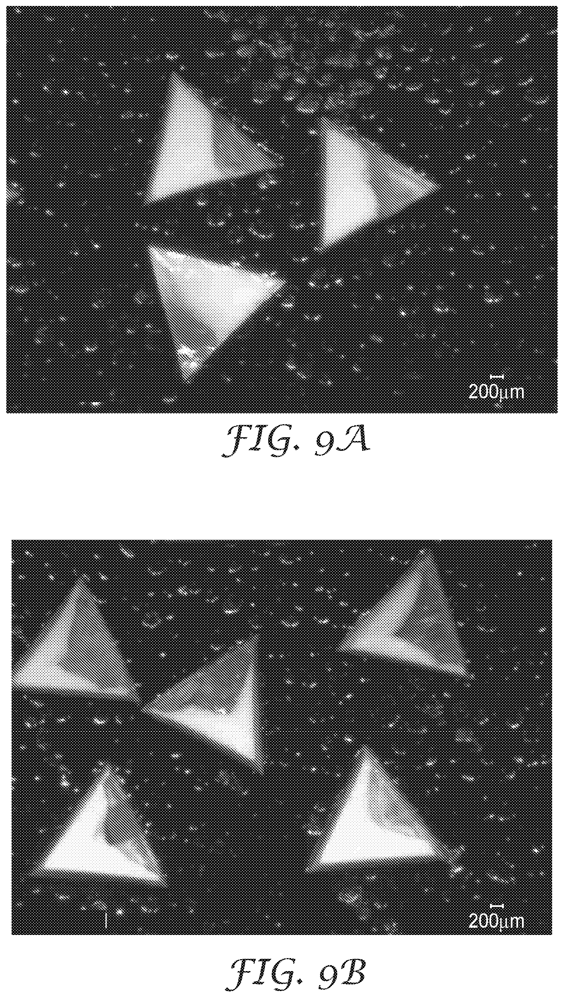

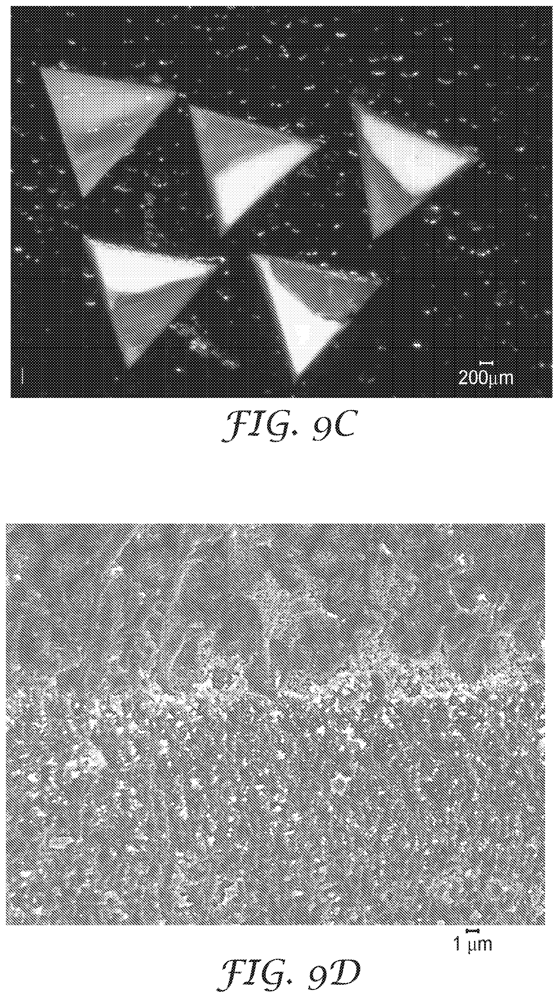

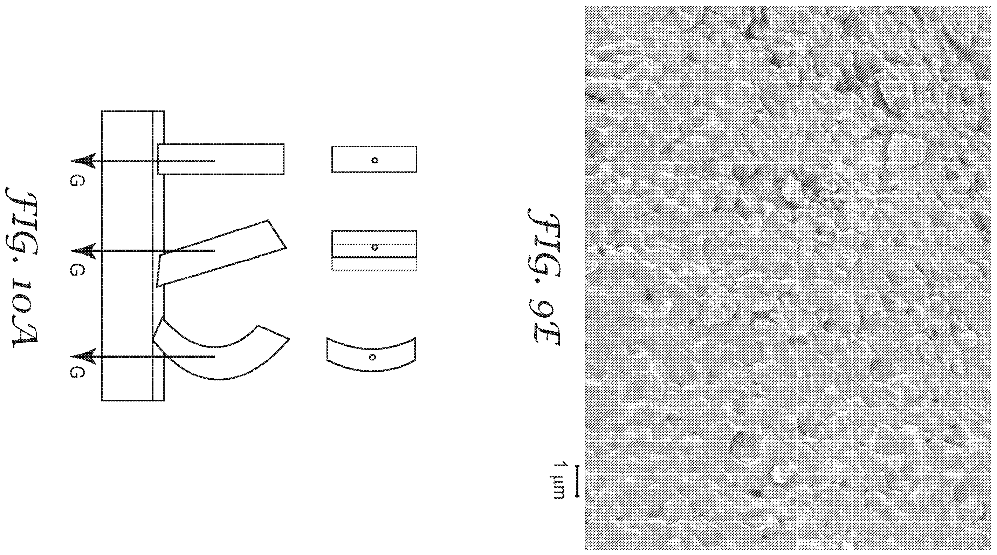

FIGS. 9-10 illustrate examples of multiphase abrasive particles.

Example-1 Making triangle shaped abrasive particle using two phase materials.

In this embodiment, the Zr-Al-Sol-Gel Precursor pre-Mix was used as Phase-1 materials, and the Al-Sol-Gel Precursor pre-Mix was used as phase-2 materials. A piece of molded production tool with triangle shaped cavities was used. The production tool has a plurality of triangular shaped cavities with a depth of 28 mils and sides 110 mil, with an inclined side wall having a preset angle stamping slope and between the side wall and the bottom of the molds.

A mold release agent, 0.2 percent peanut oil in methanol was used to coat the molding with about 0.5 mg/in^ (0.08 mg/cm^) of peanut oil applied to the molding. The excess methanol was removed by placing sheets of the molding in an air convection oven for 5 minutes at 45°C before use.

In the first step, two vertexes of the triangle shaped cavities were filled with phase-1 material. It was achieved by placing the Zr-Al-Sol-Gel Precursor pre-Mix on the surface of the molded production tool with a putty knife, followed by pushing the putty knife moving along one direction on the surface of the production tool. The phase-1 material was forced to fill the two vertices of the cavity.

In the second step, the phase-2 material, namely the Al-Sol-Gel Precursor pre-Mix, was applied onto the molded production tool with a putty knife, and then the Al-Sol-Gel Precursor pre-Mix was forced with the putty knife to fully fill the remaining cavities of the production tool.

The molded production tool filled with precursor premix was placed in an air convection oven at 45°C for at least 45 minutes to dry. The precursor shaped abrasive particles were removed from the molding by passing it over an ultrasonic horn. The precursor shaped abrasive particles were dried at approximately 140°C for 10 minutes. Fig-9A illustrates an image of the precision shaped precursor particles comprising two phase materials. By using the same procedure, triangle shaped precursor particles comprising two phase materials can be achieved. FIG.-9B presents an image of triangle shaped precursor particles comprising two phase materials, and only one vertex of the triangle was filled with phase-1 material and the remaining part of the triangle were filled with phase-2 materials. Fig.-9C shows an example of triangle shaped precursor particles comprising two phase materials and half of the triangle precursor particle was composed of phase-1 material and another half of the triangle precursor particle was composed of phase-2 materials.

The precursor particles were further converted to abrasive particles through pre-firing at 750°C for about 10 minutes and then sintered at approximately 1400°C for 15 minutes. The microstructure of the final abrasive grain was observed under SEM. FIG.-9D shows cross-section view of the boundaries between phase-1 and phase-2 materials in the sintered shaped abrasive particles made in Examle-1. The boundaries between the phases can be seen clearly, and it clearly shows that the phase-1 and phase-2 materials have distinctly different microstructures. In an enlarged image presented in FIG.-9D showing the microstructures of phase-1 materials, the microcrystals of alumina have a very uniform size and formed a close packed matrix.

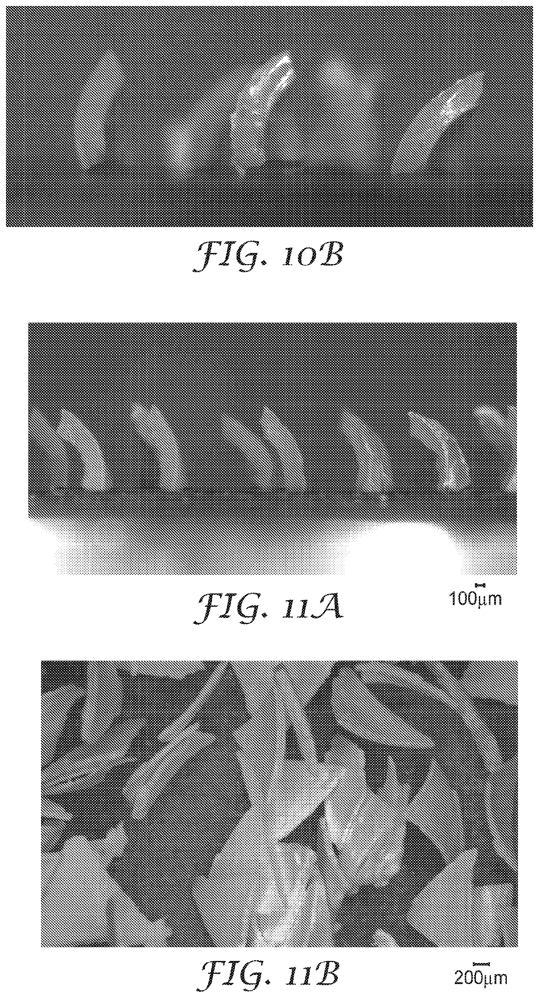

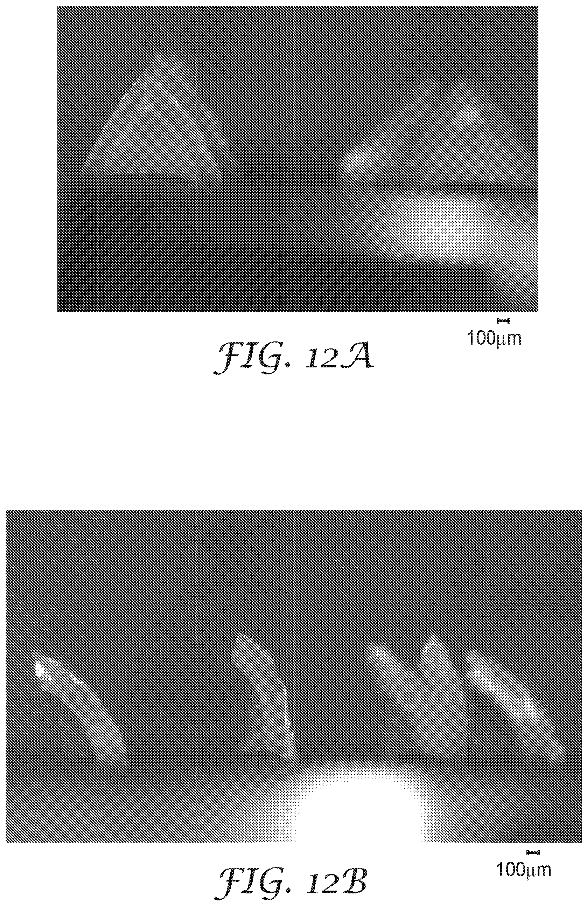

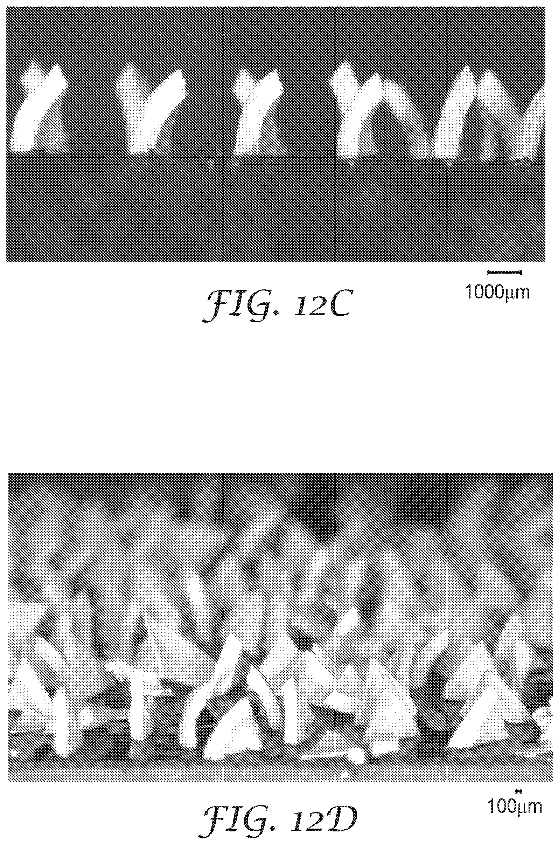

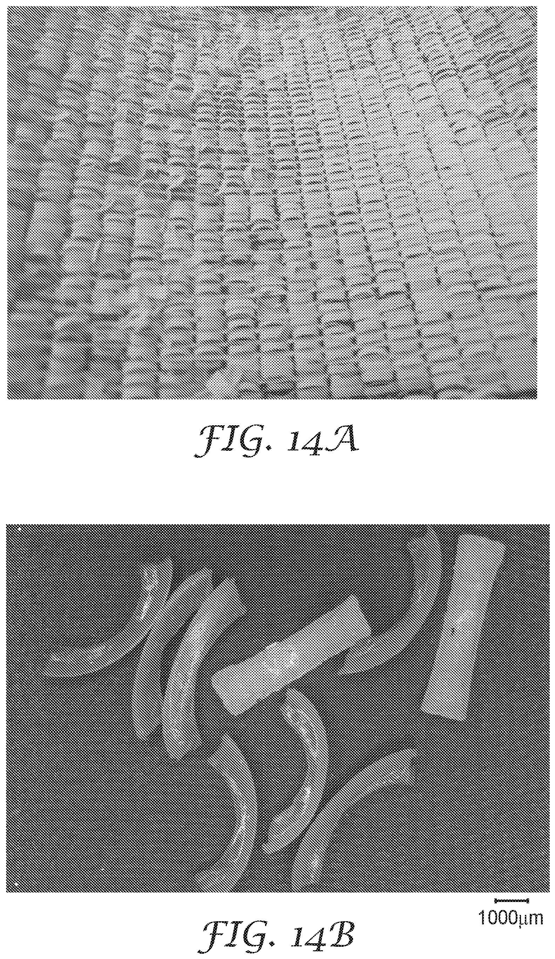

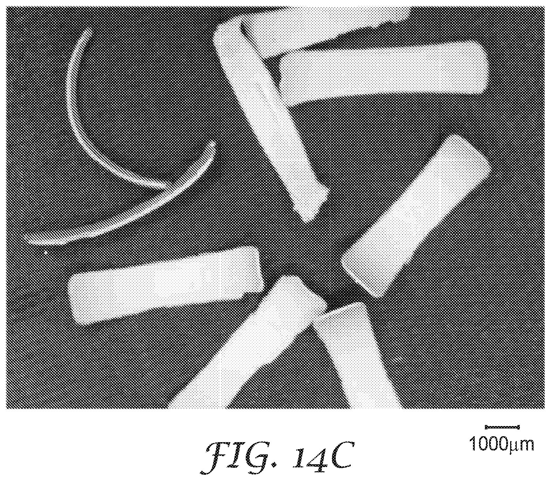

FIG. 11-14 illustrate examples of curved abrasive particles.

### Example-2 Making precision shaped curved abrasive particles

Same molded production tool and procedure as Example-1 were used, except that Al-Sol-Gel Precursor pre-Mix was used as phase-1 material and Slurry Precursor Pre-Mix was used as phase-2 material.

In the first step, Al-Sol-Gel Precursor pre-Mix was applied onto the surface of the molded production tool with a putty knife and the Al-Sol-Gel Precursor pre-Mix was forced to fill in about 2/3 volume of each triangle shaped cavities.

In the second step, Slurry Precursor Pre-Mix was placed on the surface of the molded production tool with a putty knife and forced to fully fill the remaining spaces in each cavities.

The molded production tool filled with precursor premix was placed in an air convection oven at 45°C for at least 45 minutes to dry. The volume of the Al-Sol-Gel Precursor pre-Mix shrank dramatically during the drying process due to dehydration ( the Al-Sol-Gel Precursor pre-Mix has about 60% water by weight) and the volume of the Slurry Precursor Pre-Mix barely shrank due to its high solid content (78% or higher by weight). As a result, the precursor particle bends gradually with the progress of drying due to the internal force between the two-phase materials. Due to the weak affinity between the Al-Sol-Gel Precursor and the Slurry Precursor Pre-Mix, the two phases materials separated from each other after drying, forming two curved precursor particles.

Optional, the precursor particles can be further doped with rare earth elements according to methods described in, for example, U. S. Pat. No. 5,213,591 (Celikkaya et al.) and U. S. Pat. Appln. Publ. Nos. 2009/0165394 A1 (Culler et al.) and 2009/0169816 A1 (Erickson et al.). The precursor particles were further converted to abrasive particles through pre-firing at 750°C for about 10 minutes and then sintered at approximately 1400°C for 15 minutes. FIG-11A shows an image of the side view of the curved phase-1 shaped abrasive particles. FIG-11B shows an image of the curved phase-2 shaped abrasive particles. FIG-12A and FIG-12B show the images of the curved phase-1 shaped abrasive particles from a different angle of view.

### Example-3 Making precision shaped curved abrasive particles using a temporary sacrifice layer

Same molded production tool and procedure as Example-2 were used, except that the Slurry Precursor Pre-Mix was used as phase-1 material and a PVA polymer was used as phase-2 material. FIG-12C presents an image showing the curved phase-1 abrasive particles precisely placed on a fiber backing. FIG-12D shows an image of the curved phase-1 abrasive particles randomly coated on a fiber backing.

### Making Experimental Abrasive Disc

A vulcanized fiber disc blank with a diameter of 7 inches (17.8 cm), having a center hole of 7/8 inch (2.2 cm) diameter and a thickness of 0.83 mm (33 mils) was used as the abrasive substrate. The vulcanized fiber was obtained as Dynos Vulcanized Fibre from DYNOS GmbH, Troisdorf, Germany. The fiber disc blank was coated by brush with Make Resin 1 to an add-on weight of 3.0-3.1 grams.

The coated disc was weighed and abrasive particles made in Examples as indicated were applied using an electrostatic coater. The abrasive coated disc was removed and weighed to establish the quantity of abrasive particles coated. In this example, 15.0-15.1g P36 grade curved abrasive particles made in Example-2 were used. The disc was given a make pre-cure at 90°C for 1 hour followed by 103°C for 3 hours.

The precured discs were then coated by brush with size resin. Excess size resin was removed with a dry brush until the flooded glossy appearance was reduced to a matte appearance. The size-coated discs were weighed to establish the size resin weight. The amount of size resin added was dependent on the mineral composition and weights, but was typically between 12 and 28 grams per disc. In this example, 11.5-13.0 g of size coat was used. The discs were cured by heating for 90 minutes at 90°C, followed by 16 hours at 103°C. The cured discs were orthogonally flexed over a 1.5inch (3.8 cm) diameter roller. Discs were allowed to equilibrate with ambient humidity for 1 week before testing.

### Comparative Abrasive Disc

A 7-inch (17.8 cm) abrasive fiber disc available as Cubitron II Fibre Disc 982C from 3M Company was used as comparative abrasive example. The Comparative Abrasive Disc has the similar construction as the Experimental Abrasive Disc, except it was coated with P36 grade flat triangular shaped abrasive particles.

### Grinding Performance Test

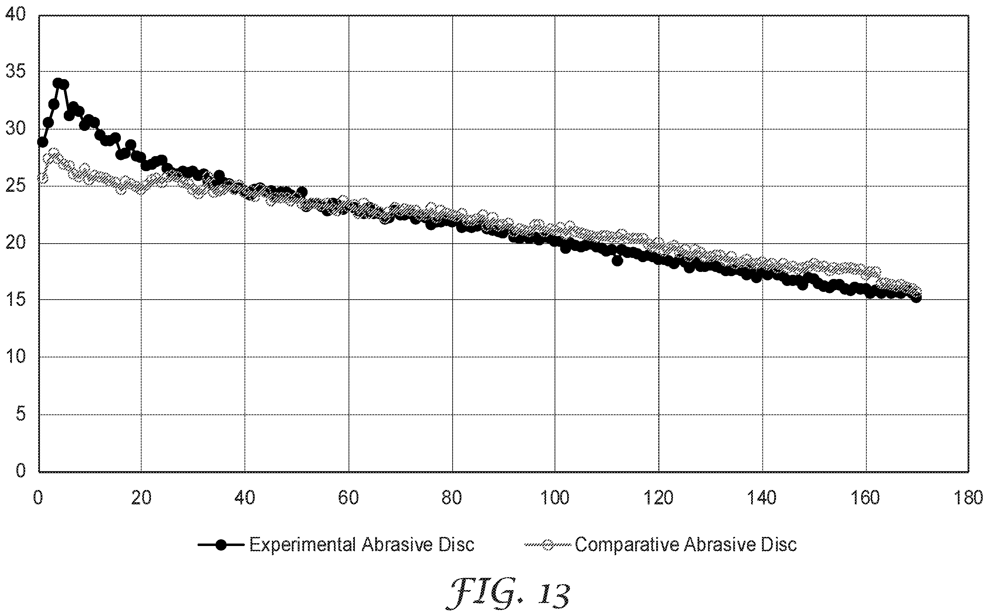

This test is designed to measure the effectiveness of an abrasive disc construction for the removal of metal from a workpiece by measuring how the cut-rate changes with time and the total amount of metal usefully removed over the life of the abrasive disc. The coated abrasive disc was mounted on a beveled aluminum back up pad and driven at a speed of 5,500 rpm. A portion of the disc overlaying the beveled edge of the backup pad was contacted with the face of a 1.25 cm by 18 cm 1018 mild steel workpiece at about 6 kg load. Each disc was used to grind a separate workpiece for one- minute intervals for a total of 20 minutes or until the disc failed or the cut rate dropped below 20 grams per minute. The amount of metal removed from each workpiece was recorded. The initial cut was reported as the amount of metal removed during the first one- minute interval. The final cut was reported as the amount of metal removed during the final one-minute interval. The total cut was the cumulative amount of metal removed from the workpieces over the entire useful life of the abrasive disc or 20 one-minute intervals, whichever was reached first. The cut data is reported in FIG. 13. in grams of workpiece metal removed. The example fiber disc coated with curved abrasive particles show higher initial cut than that of Comparative Abrasive Disc due to the exposure of sharper vertex on the surface of the abrasive surface. Results are illustrated in FIG. 13.

### Example 4

The same procedure as Example-2 was used except that a different molded production tool was used. A polypropylene tool containing parallel linear grooves (width at top 1.15 mm, depth 1.00 mm, width at bottom 0.15 mm) interrupted by obstructions (i.e., 0.917 mm height walls) spaced at regular intervals of 2.75 mm) was used to make curved rod-like precursor particles. FIG-14A shows an image of the two-phase, dried, curved rod-like precursor particle on the surface of the production tool. FIG-14B shows an image of the phase-1 curved rod-like precursor particles and FIG-14C shows an image of the phase-2 curved rod-like precursor particles.

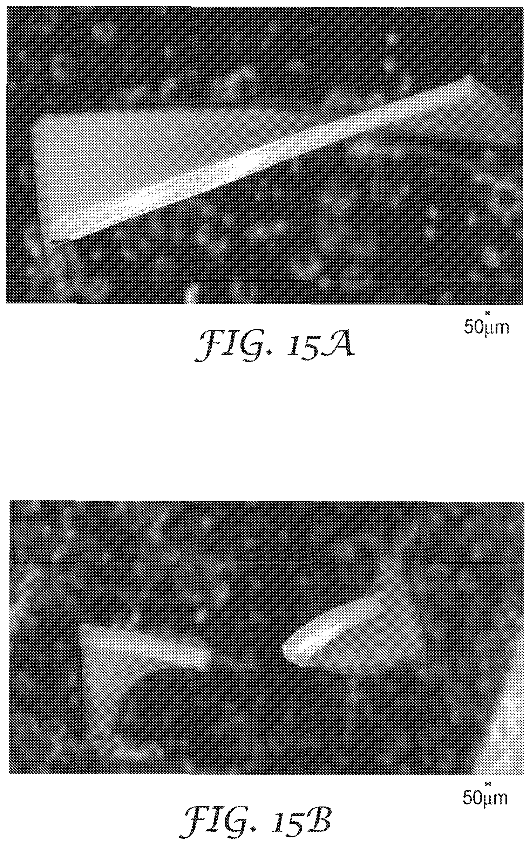

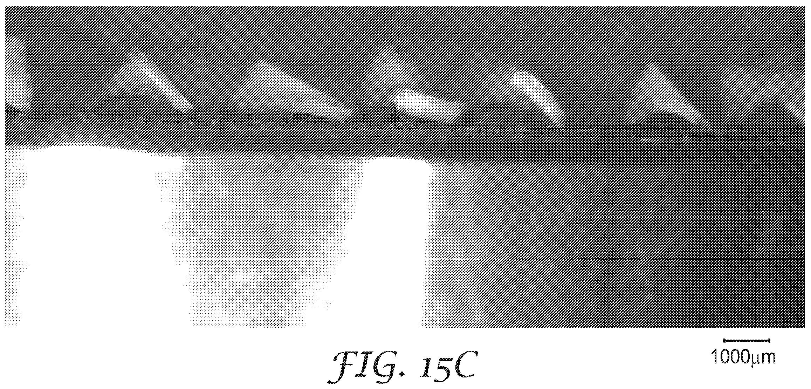

FIG. 15 illustrates examples of twisted abrasive particles made according to Example 5.

### Example-5 Making twisted abrasive particles

Same procedure as Example-4 was used except that PVA was used as phase-1 material, Al-Sol-Gel Precursor pre-Mix was used as phase-2 material, and then another layer of PVA was used as phase-3 materials.

A polypropylene tool containing parallel linear rectangles (width at top 2.0 mm, depth 1.00 mm, width at bottom 1.90 mm) interrupted by obstructions (i.e., 0.917 mm height walls) spaced at regular intervals of 3.25 mm) was used to make flake-like precursor particles. The production tool was pretreated with RA before use.

In the first step, PVA solution (8% by weight in water) was applied onto the molded production tool with a brush. The production tool was placed in the air for 5-10 minutes to let the PVA solution setting on the production tool and fill the bottom of the cavity. The sample was then dried at an air convection oven for 5 minutes at 45°C.

In the second step, Al-Sol-Gel Precursor pre-Mix was applied onto the production tool with a putty knife to fill the spaces of the cavities.

In the third step, the PVA solution (8% by weight in water) was applied onto the surface of the Al-Sol-Gel Precursor pre-Mix filled production tool with a brush and then the sample was dried at 75°C for 10 minutes. The dried precursor particles were released from the production tool by passing it over an ultrasonic horn. The released precursor particles were pre-fired at 650°C for 20 minutes to burn down the PVA layers.

Optionally, the precursor particles can be further doped with rare earth elements according to methods described in, for example, U. S. Pat. No. 5,213,591 (Celikkaya et al.) and U. S. Pat. Appln. Publ. Nos. 2009/0165394 A1 (Culler et al.) and 2009/0169816 A1 (Erickson et al.). The precursor particles were further converted to abrasive particles through pre-firing at 750°C for about 10 minutes and then sintered at approximately 1400°C for 15 minutes. FIG-15A-C shows the images of the final fired twisted flake like abrasive particles.

## Claims

1. A multiphase abrasive particle precursor, the precursor comprising:
a first phase, comprising a first material (110, 140, 170), wherein the first material (110, 140, 170) has a substantially constant first composition throughout the first phase;
a second phase, comprising a second material (120, 150, 180), wherein the second material (120, 150, 180) has a substantially constant second composition throughout the second phase;
an interface (115, 145, 175) between the first and second phases;
wherein the multiphase abrasive particle precursor is a shaped abrasive particle precursor; and
wherein the first and second materials (120, 150, 180) have different drying rates such that, during a drying step, the first and second phases are capable of drying into a first curved layer and a second curved layer.

2. The multiphase abrasive particle precursor of claim 1, wherein the first material (110, 140, 170) is a first abrasive material.

3. The multiphase abrasive particle precursor of claim 1 or 2, wherein the interface (115, 145, 175) has a shape that is substantially the same as a shape of the shaped abrasive particle precursor.

4. The multiphase abrasive particle precursor of claim 1, wherein the first material (110, 140, 170) and the second material (120, 150, 180), when dry, are capable of separating at the interface (115, 145, 175) into a first abrasive precursor particle and as second abrasive precursor particle.

5. The multiphase abrasive particle of claim 4, wherein the first abrasive precursor particle has a first shape, the second abrasive precursor particle has a second shape, and wherein the first and second shapes are the same.

6. The multiphase abrasive particle of claim 5, wherein a first degree of curvature of the first corner differs from a second degree of curvature of the second corner.

7. The multiphase abrasive particle of claim 5, wherein the first shape comprises a first corner and a second corner, and wherein the first corner and the second corner are curved in different directions.

8. A method of making a multiphase abrasive particle (100, 130, 160), the method comprising:
dispensing a first material (110, 140, 170) in a mold cavity with a mold shape, wherein the mold shape comprises a shaped perimeter and a depth;
dispensing a second material (120, 150, 180) in the mold cavity, wherein an interface forms between the first material (110, 140, 170) and the second material (120, 150, 180);
drying the dispensed first and second materials (120, 150, 180) in the mold cavity wherein, after drying, a first portion of the multiphase abrasive particle comprises the first material (110, 140, 170), and
wherein a second portion of the multiphase abrasive particle (100, 130, 160) comprises the second portion, and
wherein the first and second materials (120, 150, 180) have different drying rates such that, during the drying step, the first and second phases dry into a first curved layer and a second curved layer.

9. The method of claim 8, wherein the first material (110, 140, 170) has a substantially constant composition across the first portion and wherein the second material (120, 150, 180) has a substantially constant composition across the second portion.

10. The method of claim 8 or 9, wherein dispensing the first material (110, 140, 170) and dispensing the second material (120, 150, 180) occurs substantially simultaneously.

11. The method of any of claims 8-10, wherein the first material (110, 140, 170) dispensed as a first layer within the mold cavity.

12. The method of claim 11, wherein the second material (120, 150, 180) is dispensed into the first layer, causing displacement of first material (110, 140, 170) so that a portion of the second material (120, 150, 180) contacts a bottom surface of the mold cavity.

13. The method of claim 12, wherein the mold shape comprises a first corner and a second corner, and wherein inducing curvature comprises the first and second corners curling in the same direction.

14. The method of claim 13, wherein the mold shape comprises a first corner and a second corner, and wherein inducing curvature comprises the first and second corners curling in different directions.

15. The method of any of claims 8-14, and further comprising: sintering the dried abrasive particle at a sintering temperature.

## Patentansprüche

1. Ein mehrphasiger Schleifteilchenvorläufer, wobei der Vorläufer Folgendes aufweist:
eine erste Phase, aufweisend ein erstes Material (110, 140, 170), wobei das erste Material (110,140,170) in der gesamten ersten Phase eine im Wesentlichen konstante erste Zusammensetzung aufweist;
eine zweite Phase, aufweisend ein zweites Material (120, 150, 180), wobei das zweite Material (120, 150, 180) in der gesamten zweiten Phase eine im Wesentlichen konstante zweite Zusammensetzung aufweist;
eine Grenzfläche (115,145,175) zwischen der ersten und zweiten Phase;
wobei der mehrphasige Schleifteilchenvorläufer ein Verläufer geformter Schleifteilchen ist; und
wobei das erste und das zweite Material (120, 150, 180) unterschiedliche Trocknungsraten aufweisen, sodass während eines Trocknungsschritts die erste und die zweite Phase in der Lage sind, zu einer ersten gekrümmten Schicht und einer zweiten gekrümmten Schicht zu trocknen.

2. Der mehrphasige Schleifteilchenvorläufer nach Anspruch 1, wobei das erste Material (110,140,170) ein erstes Schleifmaterial ist.

3. Der mehrphasige Schleifteilchenvorläufer nach Anspruch 1 oder 2, wobei die Grenzfläche (115, 145, 175) eine Form aufweist, die im Wesentlichen die gleiche ist wie eine Form des geformten Schleifteilchenvorläufers.

4. Der mehrphasige Schleifteilchenvorläufer nach Anspruch 1, wobei das erste Material (110, 140, 170) und das zweite Material (120, 150, 180) im trockenen Zustand in der Lage sind, sich an der Grenzfläche (115, 145, 175) in ein erstes Schleifvorläuferteilchen und ein zweites Schleifvorläuferteilchen zu trennen.

5. Das mehrphasige Schleifteilchen nach Anspruch 4, wobei das erste Schleifvorläuferteilchen eine erste Form aufweist, das zweite Schleifvorläuferteilchen eine zweite Form aufweist, und wobei die erste und die zweite Form gleich sind.

6. Das mehrphasige Schleifteilchen nach Anspruch 5, wobei sich ein erster Krümmungsgrad der ersten Ecke von einem zweiten Krümmungsgrad der zweiten Ecke unterscheidet.

7. Das mehrphasige Schleifteilchen nach Anspruch 5, wobei die erste Form eine erste Ecke und eine zweite Ecke aufweist, und wobei die erste Ecke und die zweite Ecke in unterschiedliche Richtungen gekrümmt sind.

8. Ein Verfahren zum Herstellen eines mehrphasigen Schleifteilchens (100, 130, 160), das Verfahren aufweisend:
Abgeben eines ersten Materials (110,140,170) in einen Formhohlraum mit einer Formgestalt, wobei die Formgestalt einen geformten Umfang und eine Tiefe aufweist;
Abgeben eines zweiten Materials (120,150,180) in den Formhohlraum, wobei sich eine Grenzfläche zwischen dem ersten Material (110,140,170) und dem zweiten Material (120,150,180) bildet;
Trocknen der ausgegebenen ersten und zweiten Materialien (120, 150, 180) in dem Formhohlraum, wobei, nach dem Trocknen, ein erster Abschnitt des mehrphasigen Schleifteilchens das erste Material (110, 140, 170) aufweist, und
wobei ein zweiter Abschnitt des mehrphasigen Schleifteilchens (100, 130, 160) den zweiten Abschnitt aufweist, und
wobei das erste und das zweite Material (120, 150, 180) unterschiedliche Trocknungsraten aufweisen, sodass während des Trocknungsschritts die erste und die zweite Phase zu einer ersten gekrümmten Schicht und einer zweiten gekrümmten Schicht trocknen.

9. Das Verfahren nach Anspruch 8, wobei das erste Material (110,140,170) eine im Wesentlichen konstante Zusammensetzung über den ersten Abschnitt aufweist und wobei das zweite Material (120, 150, 180) eine im Wesentlichen konstante Zusammensetzung über den zweiten Abschnitt aufweist.

10. Das Verfahren nach Anspruch 8 oder 9, wobei das Abgeben des ersten Materials (110, 140, 170) und das Abgeben des zweiten Materials (120, 150, 180) im Wesentlichen gleichzeitig erfolgen.

11. Das Verfahren nach einem der Ansprüche 8 bis 10, wobei das erste Material (110, 140, 170) als eine erste Schicht innerhalb des Formhohlraums abgegeben wird.

12. Das Verfahren nach Anspruch 11, wobei das zweite Material (120,150,180) in die erste Schicht abgegeben wird, wodurch erstes Material (110,140,170) verdrängt wird, sodass ein Teil des zweiten Materials (120,150,180) mit einer Bodenfläche des Formhohlraums in Kontakt kommt.

13. Das Verfahren nach Anspruch 12, wobei die Formgestalt eine erste Ecke und eine zweite Ecke aufweist, und wobei das Erzeugen einer Krümmung aufweist, dass sich die erste und die zweite Ecke in die gleiche Richtung wölben.

14. Das Verfahren nach Anspruch 13, wobei die Formgestalt eine erste Ecke und eine zweite Ecke aufweist, und wobei das Erzeugen einer Krümmung aufweist, dass sich die erste und die zweite Ecke in unterschiedliche Richtungen wölben.

15. Verfahren nach einem der Ansprüche 8 bis 14, und ferner aufweisend: Sintern des getrockneten Schleifteilchens bei einer Sintertemperatur.

## Revendications

1. Précurseur de particules abrasives multiphases, le précurseur comprenant :
une première phase, comprenant un premier matériau (110, 140, 170), dans lequel le premier matériau (110, 140, 170) a une première composition sensiblement constante pendant toute la première phase ;
une seconde phase, comprenant un second matériau (120, 150, 180), dans lequel le second matériau (120, 150, 180) a une seconde composition sensiblement constante pendant toute la seconde phase ;
une interface (115, 145, 175) entre les première et seconde phases ;
dans lequel le précurseur de particules abrasives multiphases est un précurseur de particules abrasives mises en forme ; et
dans lequel les premier et second matériaux (120, 150, 180) ont des vitesses de séchage différentes de telle sorte que, lors d'une étape de séchage, les première et seconde phases sont capables de sécher en une première couche incurvée et une seconde couche incurvée.

2. Précurseur de particules abrasives multiphases selon la revendication 1, dans lequel le premier matériau (110, 140, 170) est un premier matériau abrasif.

3. Précurseur de particules abrasives multiphases selon la revendication 1 ou 2, dans lequel l'interface (115, 145, 175) a une forme qui est sensiblement la même qu'une forme du précurseur de particules abrasives mises en forme.

4. Précurseur de particules abrasives multiphases selon la revendication 1, dans lequel le premier matériau (110, 140, 170) et le second matériau (120, 150, 180), lorsqu'ils sont secs, sont capables de se séparer au niveau de l'interface (115, 145, 175) en une première particule abrasive de précurseur et une seconde particule abrasive de précurseur.

5. Particule abrasive multiphase selon la revendication 4, dans laquelle la première particule abrasive de précurseur a une première forme, la seconde particule abrasive de précurseur a une seconde forme, et dans laquelle les première et seconde formes sont identiques.

6. Particule abrasive multiphase selon la revendication 5, dans laquelle un premier degré de courbure du premier coin diffère d'un second degré de courbure du second coin.

7. Particule abrasive multiphase selon la revendication 5, dans laquelle la première forme comprend un premier coin et un second coin, et dans laquelle le premier coin et le second coin sont incurvés dans des directions différentes.

8. Procédé de fabrication d'une particule abrasive multiphase (100, 130, 160), le procédé comprenant :
la distribution d'un premier matériau (110, 140, 170) dans une cavité de moule avec une forme de moule, dans lequel la forme de moule comprend un périmètre mis en forme et une profondeur ;
la distribution d'un second matériau (120, 150, 180) dans la cavité de moule, dans lequel une interface se forme entre le premier matériau (110, 140, 170) et le second matériau (120, 150, 180) ;
le séchage des premier et second matériaux distribués (120, 150, 180) dans la cavité de moule, dans lequel, après séchage, une première partie de la particule abrasive multiphase comprend le premier matériau (110, 140, 170), et
dans lequel une seconde partie de la particule abrasive multiphase (100, 130, 160) comprend la seconde partie, et
dans lequel les premier et second matériaux (120, 150, 180) ont des vitesses de séchage différentes de telle sorte que, pendant l'étape de séchage, les première et seconde phases sèchent pour former une première couche incurvée et une seconde couche incurvée.

9. Procédé selon la revendication 8, dans lequel le premier matériau (110, 140, 170) a une composition sensiblement constante sur la première partie et dans lequel le second matériau (120, 150, 180) a une composition sensiblement constante sur la seconde partie.

10. Procédé selon la revendication 8 ou 9, dans lequel la distribution du premier matériau (110, 140, 170) et la distribution du second matériau (120, 150, 180) se produisent sensiblement simultanément.

11. Procédé selon l'une quelconque des revendications 8 à 10, dans lequel le premier matériau (110, 140, 170) est distribué sous forme d'une première couche au sein de la cavité de moule.

12. Procédé selon la revendication 11, dans lequel le second matériau (120, 150, 180) est distribué dans la première couche, provoquant le déplacement du premier matériau (110, 140, 170) de telle sorte qu'une partie du second matériau (120, 150, 180) entre en contact avec une surface inférieure de la cavité de moule.

13. Procédé selon la revendication 12, dans lequel la forme de moule comprend un premier coin et un second coin, et dans lequel l'induction d'une courbure comprend l'enroulement des premier et second coins dans la même direction.

14. Procédé selon la revendication 13, dans lequel la forme de moule comprend un premier coin et un second coin, et dans lequel l'induction d'une courbure comprend le fait que les premier et second coins se courbent dans des directions différentes.

15. Procédé selon l'une quelconque des revendications 8 à 14, et comprenant en outre : le frittage de la particule abrasive séchée à une température de frittage.
